# EUROPEAN PATENT SPECIFICATION

(11) **EP 4 040 783 B1**
(45) Date of publication and mention of the grant of the patent: **19.11.2025**
(21) Application number: 22163015.5
(22) Date of filing: 28.06.2018
(51) Int. Cl.: H04N 7/18

(54) **IMAGING DEVICE, CAMERA-EQUIPPED DRONE, AND MODE CONTROL METHOD, AND PROGRAM**
BILDGEBUNGSVORRICHTUNG, MIT KAMERA AUSGESTATTETE DROHNE UND MODUSSTEUERUNGSVERFAHREN UND PROGRAMM
DISPOSITIF D'IMAGERIE, DRONE ÉQUIPÉ D'UNE CAMÉRA ET PROCÉDÉ ET PROGRAMME DE COMMANDE DE MODE

(30) Priority: 05.07.2017 JP 2017131674
(43) Date of publication of application: 10.08.2022
(62) Divisional of application: 18743876.7
(73) Proprietor: Sony Group Corporation, Tokyo 108-0075 (JP)
(72) Inventor: HARADA, Takeshi, Tokyo, 108-0075 (JP); ODA, Ryunosuke, Tokyo, 108-0075 (JP)
(74) Representative: D Young & Co LLP

(56) References cited:
- EP-A1- 2 099 197
- JP-A- 2007 148 802

## Description

### [CROSS REFERENCE TO RELATED APPLICATIONS]

This application claims the benefit of Japanese Priority Patent Application JP 2017-131674 filed on July 5, 2017.

### [Technical Field]

The present disclosure relates to an imaging device imaging device, such as a camera or the like, for use on-board a reconnaissance vehicle, such as a drone or remote controlled vehicle, a camera-equipped drone, a method, and a program. More particularly, the present disclosure relates to an imaging device, a camera-equipped drone, a mode control method, and a program which are capable of performing switching between an image photographing mode and an image transfer mode.

### [Background Art]

In recent years, the use of reconnaissance vehicles such as drones which are compact air vehicles which performs remote controlled flight or autonomous flight based on a GPS or the like has been rapidly increasing.

For example, a drone is equipped with a camera and used for a process of photographing the landscape on the ground from the sky or the like.

In addition, recently, aerial images using a drone are used even in a terrain checking process, a surveying process, construction sites, and the like.

used even in a terrain checking process, a surveying process, construction sites, and the like.

For example, examples of a type of drone include a type in which flight control is performed in accordance with an instruction from a remote controller on the ground and a type in which position information of a GPS or the like is received, and autonomous flight is performed.

In both cases, a controller (control unit) of a drone main body receives an instruction signal of a remote controller or a GPS signal, and flight is performed.

For example, control of a photographing start or stop process, a photographing setting, and the like of the camera mounted in the drone is executed in accordance with a command output from the controller of the drone main body to the camera side.

For example, the instruction of the remote controller on the ground is received by the controller of the drone main body, and the controller of the drone main body outputs a photographing control command to the camera on the basis of the instruction.

In addition, in the case of the autonomous flight type drone, the photographing control command is output to the camera in accordance with a program stored in a memory in the controller of the drone main body.

For example, in a case where a photographing position recorded in a program coincides with a current position based on the GPS signal, a photographing start command is output to the camera.

The controller of the drone main body and the camera have, for example, a universal serial bus (USB) connection configuration.

For example, the controller of the drone main body outputs various photographing control commands to the camera in accordance with a picture transfer protocol (PTP) which is a USB communication standard (communication protocol).

Furthermore, the controller of the drone main body performs wireless communication with a communication device of a user who is a drone administrator on the ground. For example, the controller of the drone main body gives a notification indicating a state of the drone or the like to the communication device of the user.

In order for the user to acquire photographed images of the camera mounted in the drone, a method in which after the photographing is finished, the drone returns to a base station on the ground, a memory card such as an SD card which is an image storage unit of the camera is removed and then loaded onto a PC or the like, and the photographed images are checked is common.

Alternatively, a process is performed in which the camera is removed from the drone main body, the camera is connected to a host device such as a PC, and the host device reads images stored in the storage unit of the camera.

However, in both cases, the above process is to acquire and check the photographed images after the drone returns to the ground, and for example, it is difficult to check whether or not a desired image has been photographed at the time of image photographing.

As described above, when the process of acquiring and checking the photographed images is performed after the drone returns to the ground, in a case where a desired image fails to be photographed, there is a problem in that it is necessary to perform re-photographing, and loss of time and cost increase are caused.

It is technically possible to transfer an image photographed by the camera from the camera to the drone main body controller and further transmit the image from the drone main body controller to the communication device such as the PC on the ground.

However, if an image transfer is executed using a PTP communication protocol while performing photographing control according to PTP communication which is the USB communication standard between the drone main body controller and the camera, an image transfer time from the camera to the drone main body controller increases, and the photographing control command is unable to be issued during that time, and thus there occurs a problem in that photographing control is obstructed.

For example, a configuration in which two protocols of the PTP and the mass storage class (MSC) are switched and used is disclosed in PTL 1 (JP 2007-148802A).

The configuration disclosed in PTL 1 is a configuration in which the PC and the camera are connected, and a predetermined message is transmitted from the PC side to the camera to switch the protocol.

In order to implement the configuration disclosed in PTL 1, it is necessary for the drone main body controller side to transmit a message for protocol switching to the camera, and it is necessary to change a specification (program) of the drone main body controller side.

### [Citation List]

### [Patent Literature]

[PTL 1]
JP 2007-148802A

### [Summary]

### [Technical Problem]

For example, the present disclosure was made in light of the above problems, and it is desirable to provide an imaging device, a camera-equipped drone, a mode control method, and a program which are capable of enabling the camera to autonomously perform switching between the image photographing mode and the image transfer mode and performing efficient image transfer without changing the specification (program) of the drone main body controller side.

### [Solution to Problem]

Various aspects and features of the present technique are defined in the appended claims.

An imaging device, such as a camera or the like, for use on-board a reconnaissance vehicle, such as a drone or remote controlled vehicle, comprises an image capturing unit (32, 33, 34) configured when activated to capture photographic or video images of a photographic area, and a control unit (31). The control unit is configured to communicate via a serial communications interface, such as a USB interface, with a control body unit of the reconnaissance vehicle, and to operate in an image photographing mode in which the control unit (31) receives control information from the control body unit of the reconnaissance vehicle via the serial communications interface and in an image transfer mode in which the control unit (31) transfers the photographic or video images to the control body unit of the reconnaissance vehicle via the serial communications interface in accordance with a data transfer protocol. The control unit (31) is configured in response to detecting mode switching conditions to switch autonomously from the image photographing mode to the image transfer mode to transfer one or more photographic or video images to the control body unit of the reconnaissance vehicle.

Accordingly only a single serial communications interface, such as a USB interface, need by provided both to control the imaging device and to transfer the captured images from the imaging device in the image transfer mode using a data transfer protocol, such as a mass storage class, MTC, compatible type data communications protocol.

For example, a mass storage class (MSC) which is a USB data transfer standard is used, it is possible to transfer images from the camera to the drone main body controller at a high speed.

The image photographing mode in which the control unit (31) receives control information from the control body unit of the reconnaissance vehicle via the serial communications interface may include communicating the control information in accordance with a PTP (picture transfer protocol) communications protocol. Although the PTP communications protocol includes a facility for communicating captured images as well as controlling the imaging device (camera), the transfer of the images is relatively slow and unsuitable for transferring images represented as a large volume of data such as high resolution images or video. Furthermore both control of the imaging device and the transfer of the captured images can be arranged via the same interface, which may be a serial communications interface such as a USB.

Accordingly, providing a facility in which the imaging device can be arranged in co-operation with a reconnaissance vehicle such as a drone to switch to a mode which performs an image transfer according to an MTC-type protocol, then the images can be transferred to a control body unit of the drone for storage or onward communication more quickly and efficiently, which may also reduce power consumption.

Various further aspects and features of the present technique are defined in the appended claims and include a reconnaissance vehicle a method of operating an imaging device and a computer program.

Still other objects, features, and advantages of the present disclosure will become apparent from a detailed description based on embodiments of the present disclosure to be described later or the appended drawings. Further, in this specification, a "system" is a logical aggregate configuration of a plurality of devices and not limited to a configuration in which devices of respective configurations are in the same housing.

### [Advantageous Effects of Invention]

According to a configuration of an embodiment of the present disclosure, a configuration in which switching between an image photographing mode and an image transfer mode is performed in accordance with whether or not a mode switching condition is satisfied, and communication according to a different communication protocol is performed in each mode is implemented.

Specifically, for example, a control unit which executes mode switching between the image photographing mode and the image transfer mode is provided, and the control unit determines whether or not a prespecified mode switching condition is satisfied and executes a process of performing switching from the image photographing mode to the image transfer mode in a case where the mode switching condition is satisfied. In the image photographing mode, communication according to a PTP is executed with a connected drone main body control device, and in the image transfer mode, communication according to a mass storage class (MSC) is executed with the connected drone main body control device.

With the present configuration, the configuration in which switching between the image photographing mode and the image transfer mode is performed in accordance with whether or not the mode switching condition is satisfied, and the communication according to the different communication protocol is performed in each mode is implemented.

Further, the effects described in this specification are merely examples and not limited, and additional effects may be obtained.

### [Brief Description of Drawings]

[Fig. 1]

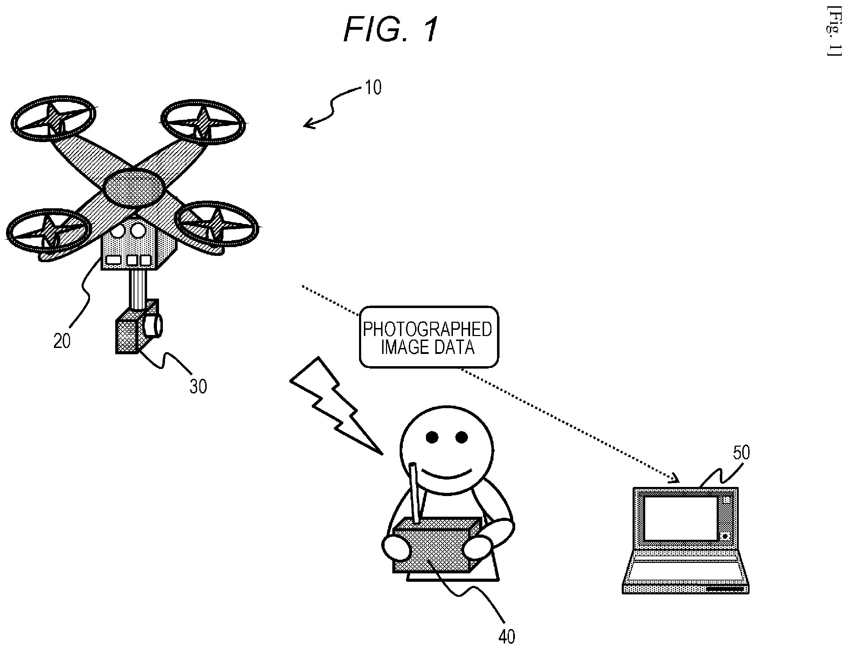

   Fig. 1 is a diagram illustrating an example of flight of a camera-equipped drone and an image photographing process.
[Fig. 2]

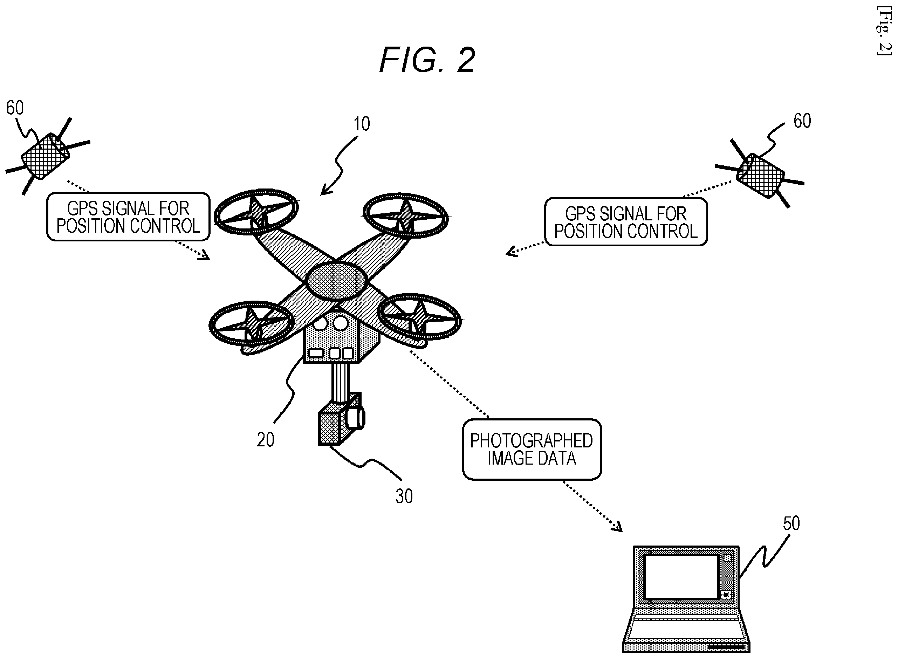

   Fig. 2 is a diagram illustrating an example of flight of a camera-equipped drone and an image photographing process.
[Fig. 3]

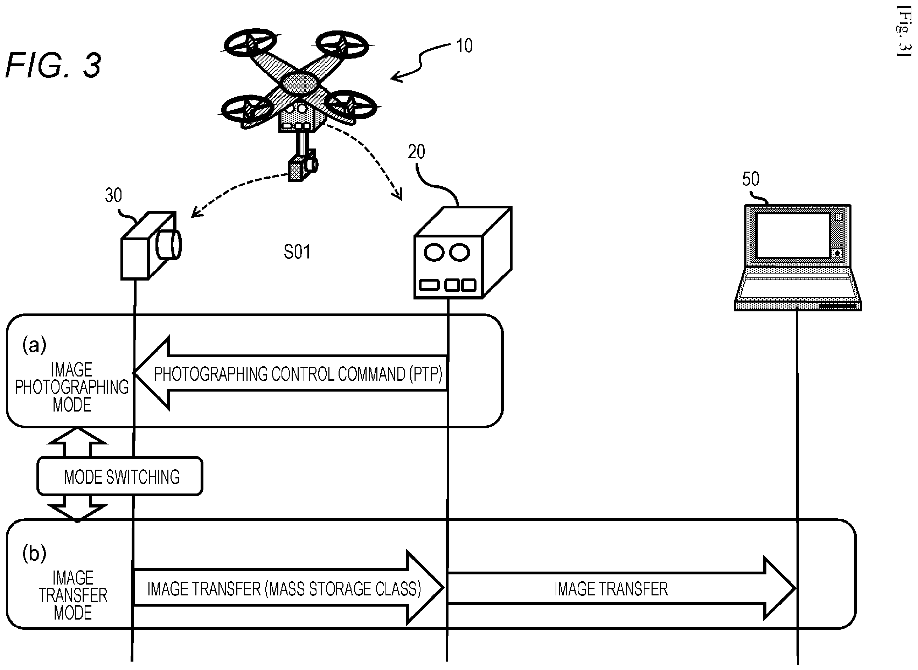

   Fig. 3 is a diagram illustrating an example of image photographing and transfer sequence of a camera-equipped drone.
[Fig. 4]

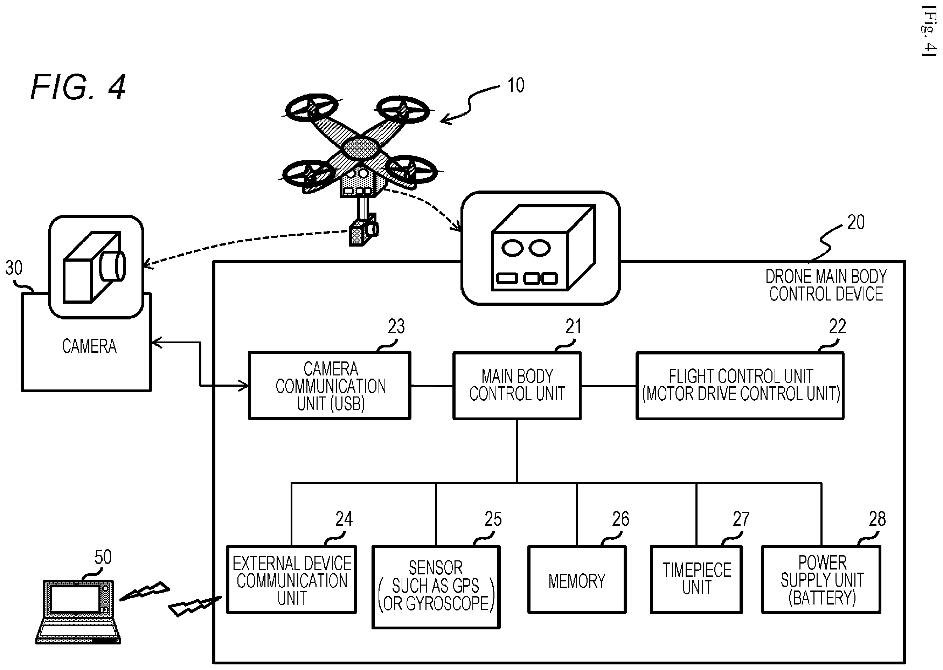

   Fig. 4 is a diagram illustrating a configuration example of a drone main body control device.
[Fig. 5]

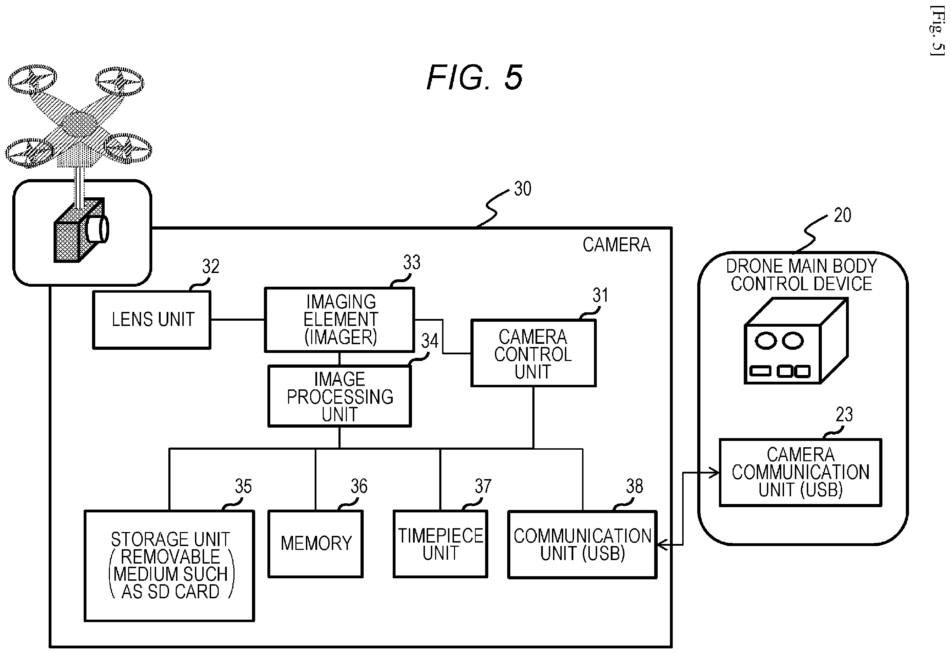

   Fig. 5 is a diagram illustrating a configuration example of a camera.
[Fig. 6]

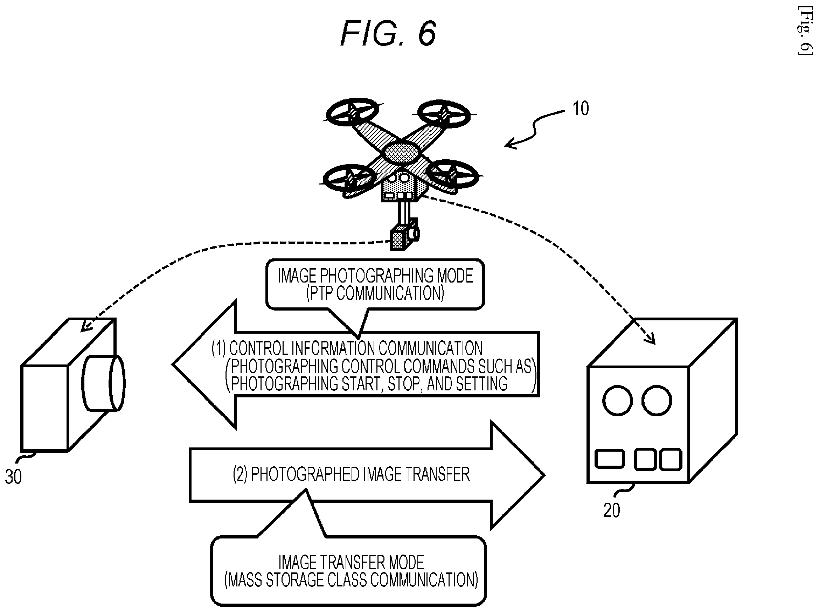

   Fig. 6 is a diagram illustrating a communication process example between a drone main body control device and a camera.
[Fig. 7]

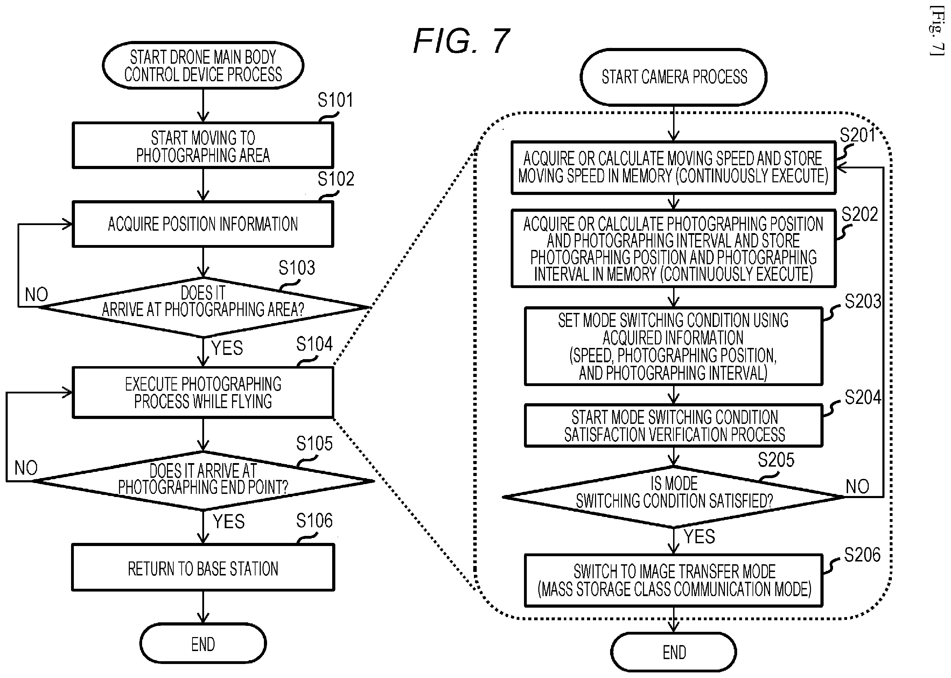

   Fig. 7 is a flowchart illustrating a processing sequence of a drone main body control device and a camera of a camera-equipped drone.
[Fig. 8]

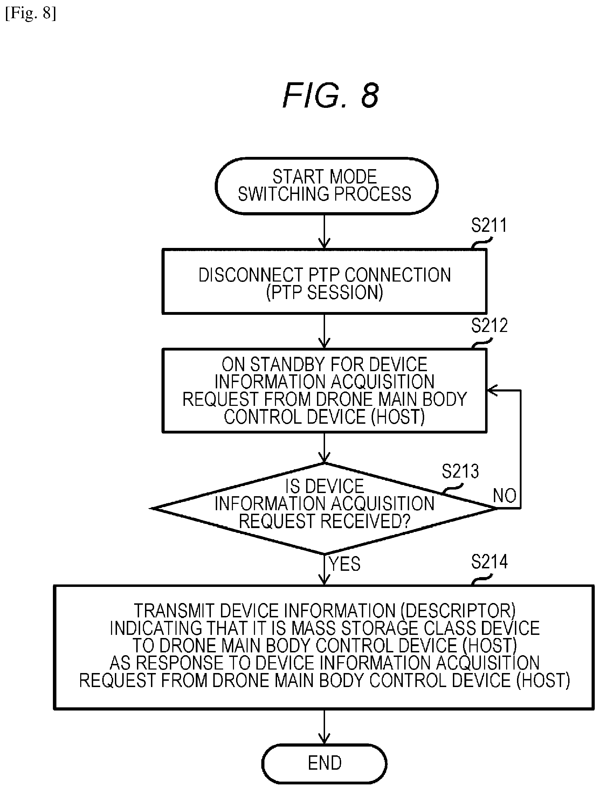

   Fig. 8 is a flowchart illustrating a processing sequence of a camera of a camera-equipped drone.
[Fig. 9]

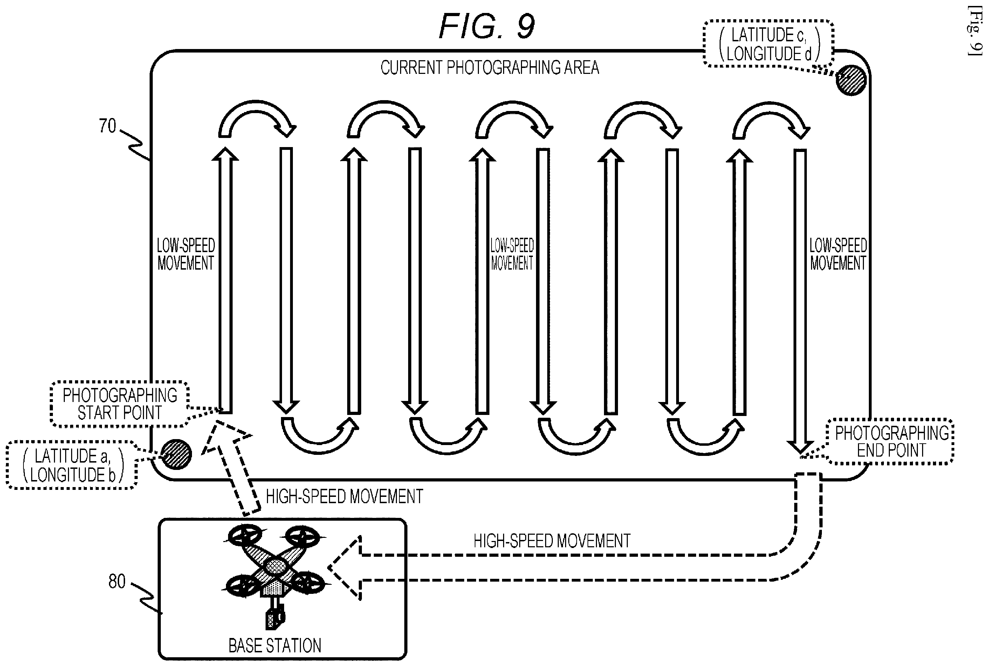

   Fig. 9 is a diagram illustrating an example of an image photographing process of a camera-equipped drone.
[Fig. 10]

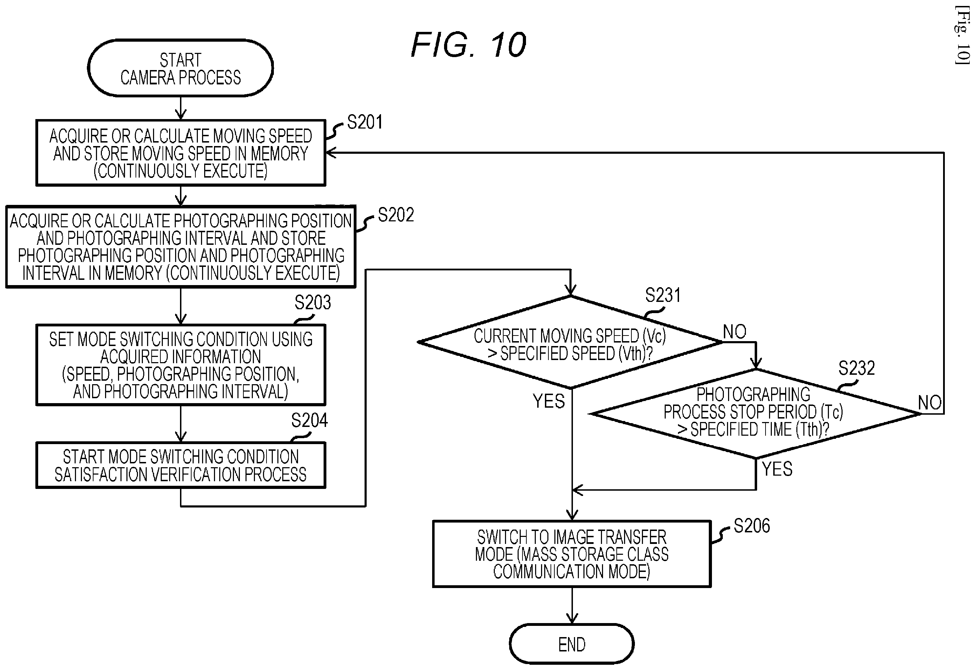

   Fig. 10 is a flowchart illustrating a processing sequence of a camera of a camera-equipped drone.
[Fig. 11]

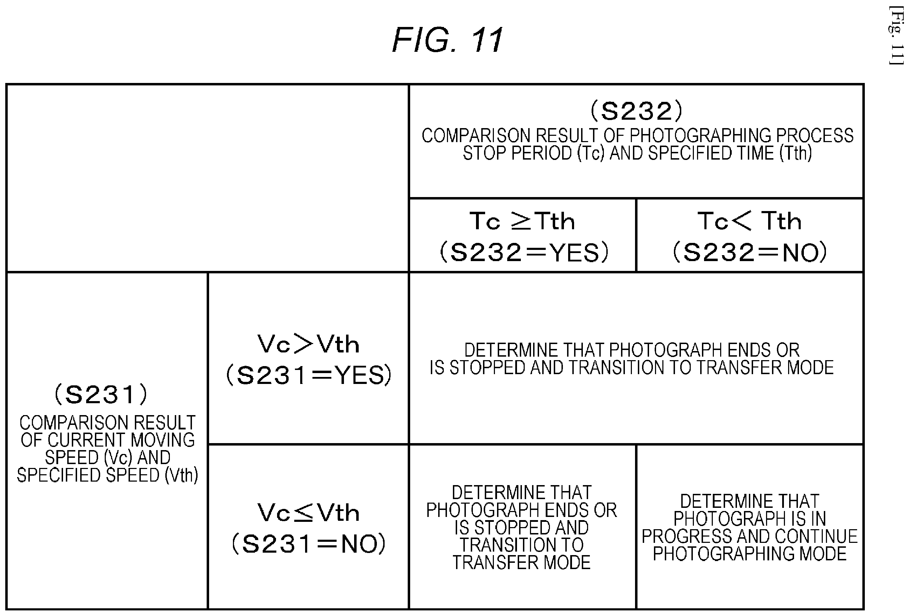

   Fig. 11 is a diagram for describing a correspondence relation between a condition of a mode switching process of a camera of a camera-equipped drone and a process to be executed.
[Fig. 12]

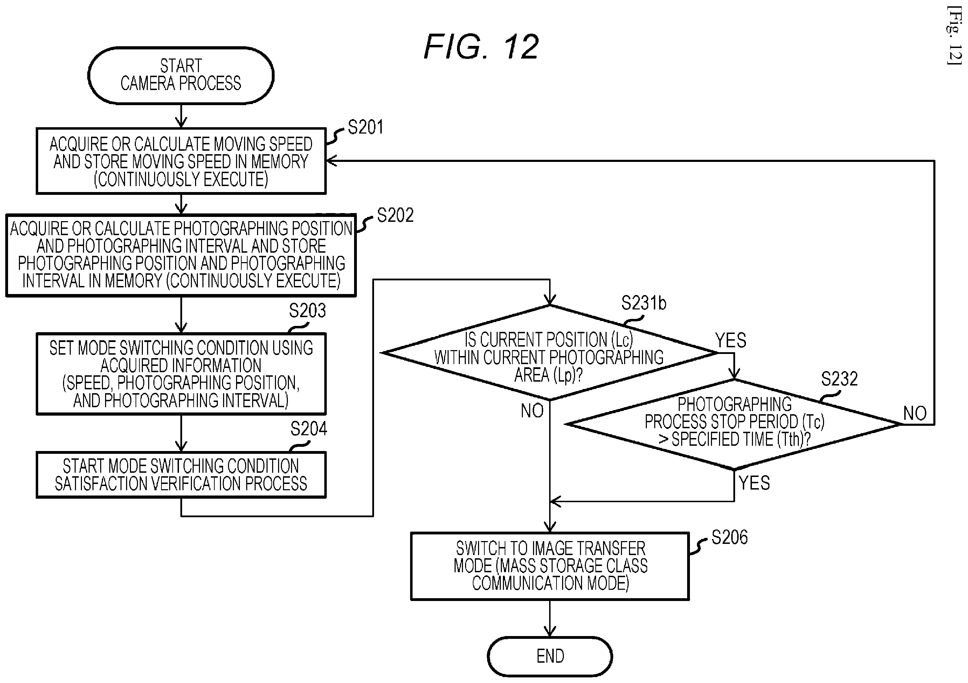

   Fig. 12 is a flowchart illustrating a processing sequence of a camera of a camera-equipped drone.
[Fig. 13]

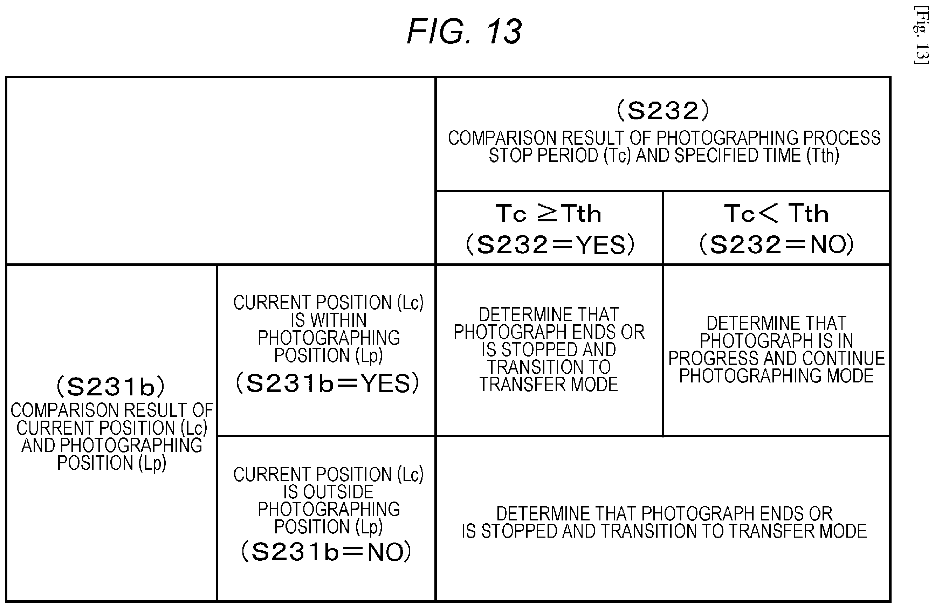

   Fig. 13 is a diagram for describing a correspondence relation between a condition of a mode switching process of a camera of a camera-equipped drone and a process to be executed.
[Fig. 14]

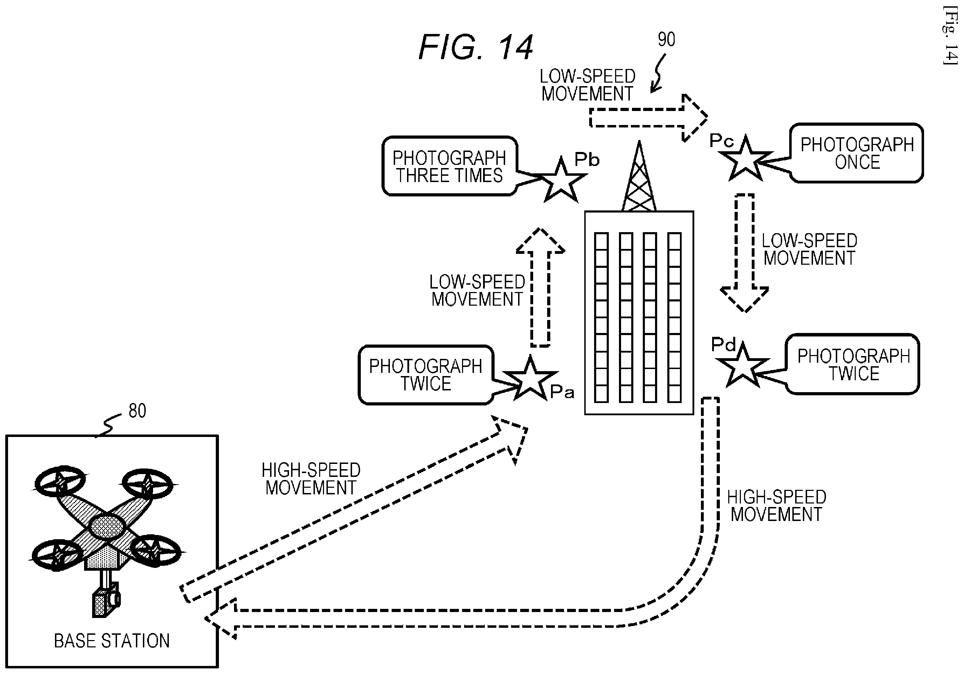

   Fig. 14 is a diagram illustrating an example of an image photographing process of a camera-equipped drone.
[Fig. 15]

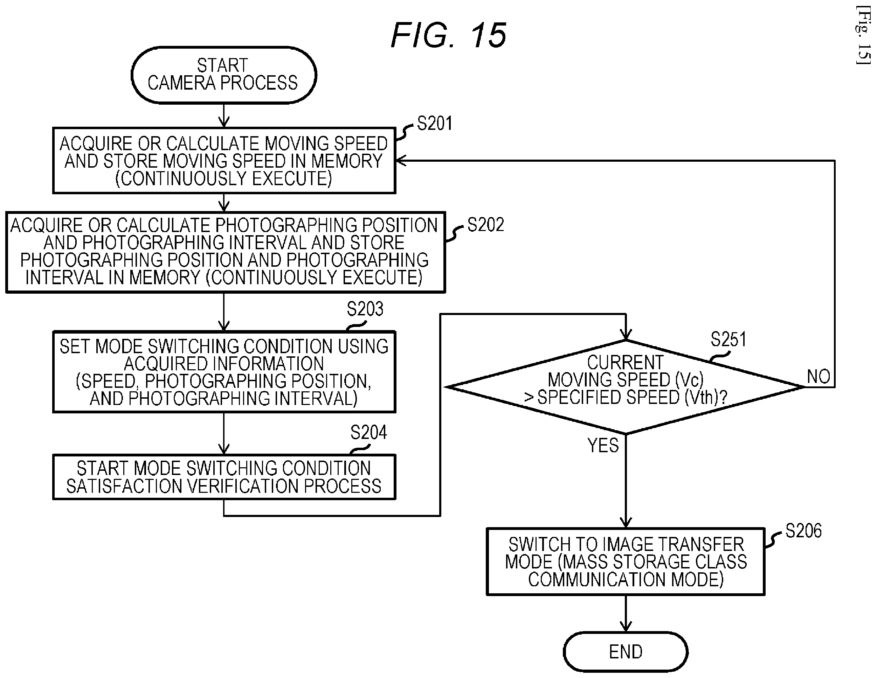

   Fig. 15 is a flowchart illustrating a processing sequence of a camera of a camera-equipped drone.
[Fig. 16]

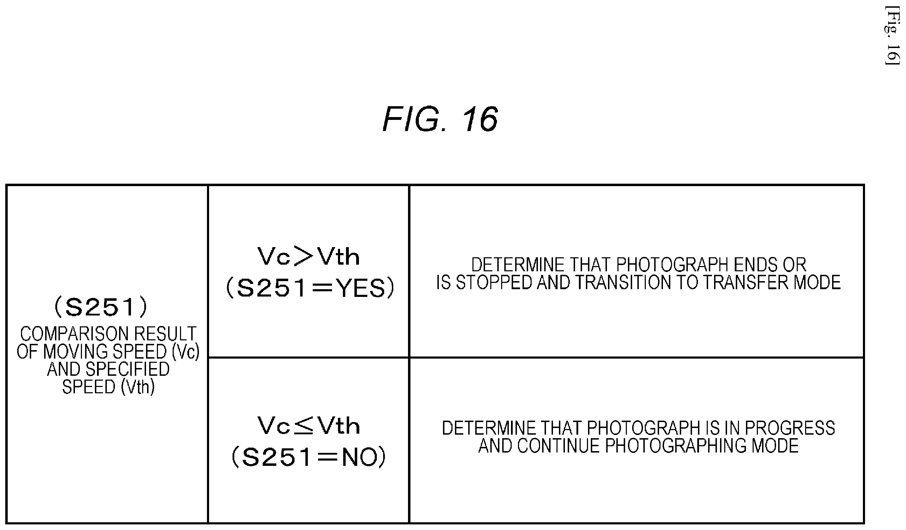

   Fig. 16 is a diagram for describing a correspondence relation between a condition of a mode switching process of a camera of a camera-equipped drone and a process to be executed.

### [Description of Embodiments]

An imaging device, a camera-equipped drone, a mode control method, and a program of the present disclosure will be described below in detail with reference to the appended drawings. Further, the description will proceed in accordance with the following items.
1. Configuration example of system which process of present disclosure can be applied
2. Configuration example of drone main body control device and camera
3. Specific example of switching process between image photographing mode and image transfer mode
4. Setting of mode switching condition according to various photographing situations and specific example of mode switching process
4-1. (First process example) process example in which moving speed and photographing process stop period are used as mode switching determination condition
4-2. (Second process example) process example in which current position and photographing process stop period are used as mode switching determination condition
4-3. (Third process example) process example in which only moving switching speed is used as mode switching determination condition
5. Conclusion of configuration of present disclosure

### <1. Configuration example of system which process of present disclosure can be applied>

First, a configuration example of a system to which a process of the present disclosure can be applied will be described with reference to Fig. 1.

Fig. 1 is a diagram illustrating an example of a system configuration to which the process of the present disclosure can be applied.

Fig. 1 illustrates a camera-equipped drone 10. The camera-equipped drone 10 includes a drone main body control device (controller) 20 and a camera 30. The drone main body control device 20 and the camera 30 are connected via a USB. In the following description, the term camera will be used for simplicity, although it will be appreciated that other terms could be used such as imaging apparatus or device or image generation apparatus. In some examples the camera may be a video generating device for capturing video images or a high definition imaging apparatus for capturing high resolution photographs. Similarly, as indicated above, a drone is one example of a reconnaissance vehicle or remote controlled vehicle.

In accordance with the PTP which is a USB communication standard (communication protocol), the drone main body control device (controller) 20 transmits various photographing control commands such as an image photographing start, an image photographing stop, and an image photographing setting to the camera 30.

The drone main body control device 20 carries out wireless communication with a remote controller 40 owned by the user who is the drone administrator on the ground and performs flight in accordance with a command input from the remote controller 40.

The photographed image of the camera 30 is transferred from the camera 30 to the drone main body control device 20 and further transmitted from the drone main body control device 20 to a PC 50 on the ground.

The camera 30 of the present disclosure autonomously performs switching between the image photographing mode and the image transfer mode.

Specifically, in a case where the camera 30 is set to the image photographing mode, the camera 30 receives various photographing control commands such as the image photographing start, the image photographing stop, and the image photographing setting from the drone main body control device (controller) 20 in accordance with for example the PTP which is the USB communication standard (communication protocol), and performs the photographing process.

On the other hand, in a case where the camera 30 is set to the image transfer mode, the camera 30 transfers the photographed images to the drone main body control device 20 at a high speed using a data transfer protocol such as the mass storage class (MSC) which is the USB data transfer standard.

The drone main body control device 20 further transmits the photographed image data input from the camera 30 to the PC 50.

With a series of processes described above, the user on the ground can immediately check the photographed images of the camera 30 in the sky.

The system illustrated in Fig. 1 is a system in which the camera-equipped drone 10 flies in accordance with the control information transmitted from the remote controller 40 owned by the user on the ground, but a configuration in which the camera-equipped drone 10 receives the position information such as GPS and performs flight autonomously without performing the flight control by the remote controller 40 may be provided.

A configuration of an autonomic flight type drone system to which the process of the present disclosure can be applied will be described with reference to Fig. 2.

Fig. 2 illustrates a camera-equipped drone 10, similarly to Fig. 1. The camera-equipped drone 10 includes a drone main body control device (controller) 20 and a camera 30. The drone main body control device 20 and the camera 30 are connected via a USB.

The drone main body control device (controller) 20 transmits various photographing control commands such as the image photographing start, the image photographing stop, and the image photographing setting to the camera 30 in accordance with the PTP which is the USB communication standard (communication protocol).

In the configuration illustrated in Fig. 2, the drone main body control device 20 receives GPS signals from GPS satellites 60, checks its own position, and performs flight in accordance with a flight route according to a program stored in a memory in the drone main body control device 20.

Further, if a prespecified position is reached, the photographing start command is output to the camera 30 to start the photographing process. Further, photographing of various images is performed in accordance with the program, and if a predetermined photographing process is completed, a photographing end command is output to the camera 30.

In the present configuration, the photographed image of the camera 30 is transferred from the camera 30 to the drone main body control device 20 and further transmitted from the drone main body control device 20 to the PC 50 on the ground.

In the present configuration, the camera 30 of the present disclosure autonomously performs switching between the image photographing mode and the image transfer mode. In other words, in a case where the camera 30 is set to the image photographing mode, the camera 30 receives various photographing control commands such as the image photographing start, the image photographing stop, and the image photographing setting from the drone main body control device (controller) 20 in accordance with the PTP which is the USB communication standard (communication protocol), and performs the photographing process.

On the other hand, if the camera 30 is set to the image transfer mode, the camera 30 transfers the photographed images from the camera 30 to the drone main body control device 20 at a high speed using the mass storage class (MSC) which is the USB data transfer standard.

The drone main body control device 20 further transmits the photographed image data input from the camera 30 to the PC 50.

With a series of processes described above, the user on the ground can immediately check the photographed images of the camera 30 in the sky.

An example of a communication process between the respective devices in the system illustrated in Fig. 1 and Fig. 2 will be described with reference to Fig. 3. Fig. 3 illustrates the camera 30 and the drone main body control device 20 constituting the camera-equipped drone 10 which flies over the sky and the PC 20 on the ground side.

As described with reference to Figs. 1 and 2, the camera 30 autonomously performs switching between the image photographing mode and image transfer mode.

The communication processing illustrated in Fig. 3(a) is a communication process example in a case where the camera 30 is set to the image photographing mode.

In a case where the camera 30 is set to the image photographing mode, the camera 30 receives various photographing control commands such as the image photographing start, the image photographing stop, and the image photographing setting from the drone main body control device (controller) 20 in accordance with the PTP which is the USB communication standard (communication protocol), and performs the photographing process.

The communication process illustrated in Fig. 3(b) is a communication process example in a case where the camera 30 is set to the image transfer mode.

In a case where the camera 30 is set to the image transfer mode, the camera 30 transfers the photographed images to the drone main body control device 20 at a high speed using the mass storage class (MSC) which is the USB data transfer standard.

The drone main body control device 20 further transmits the photographed image data input from the camera 30 to the PC 50.

With a series of processes described above, the user on the ground can immediately check the photographed images of the camera 30 in the sky.

Further, the switching process of the image photographing mode and the image transfer mode by the camera 30 is executed by the camera 30 on the basis of a moving speed of the camera-equipped drone 10, an image photographing interval, or the like.

A specific example of the mode switching process will be described in detail later.

### <2. Configuration example of drone main body control device and camera>

Next, a configuration example of the drone main body control device 20 and the camera 30 constituting the camera-equipped drone 10 will be described.

Fig. 4 is a block diagram illustrating a configuration example of the drone main body control device 20 constituting the camera-equipped drone 10.

As illustrated in Fig. 4, the drone main body control device 20 includes a main body control unit 21, a flight control unit 22, a camera communication unit 23, an external device communication unit 24, a sensor (a GPS, a gyroscope, or the like) 25, a memory 26, a timepiece unit 27, and a power supply unit (battery) 28.

The main body control unit 21 controls the drone main body in general. For example, the main body control unit 21 executes control for performing flight according to a preset flight program or a photographing process according to a photographing program.

The program is stored in the memory 26. The main body control unit 21 has a program execution function such as a CPU and reads out and executes the program stored in the memory 26.

Specifically, the flight control unit 22 performs, for example, motor drive control of a propeller. The flight control unit 22 controls the rotation speed and the like of the plurality of propellers such that the flight according to the program is performed in accordance with an instruction from the main body control unit 21.

The camera communication unit 23 executes communication with the camera 30.

In this example, the camera communication unit 23 is configured as a communication unit that performs USB communication according to a USB standard.

The camera communication unit 23 performs communication according to each protocol of the PTP and the mass storage class (MSC) described above with reference to Fig. 3.

In a case where the camera 30 is set to the image photographing mode, various photographing control commands such as the image photographing start, the image photographing stop, and the image photographing setting are transmitted to the camera 30 in accordance with the PTP which is one of USB data communication protocols.

On the other hand, in a case where the camera 30 is set to the image transfer mode, the photographed image is input from the camera 30 using the mass storage class (MSC) which is the USB data transfer standard.

The external device communication unit 24 performs communication with, for example, a PC on the ground, a remote controller, or the like.

In a case where maneuver by the remote controller is performed as described above with reference to Fig. 1, maneuver manipulation information or the like by the user is received from the remote controller, and the flight control is performed.

Further, in a case where autonomous flight using the GPS signal or the like is performed as described with reference to Fig. 2, the maneuver information from the remote controller is not received, and the flight according to the programed flight route stored in the memory 26 is performed while performing self-position checking using the GPS signal received by the sensor (The GPS, the gyroscope, or the like) 25.

Further, the sensor 25 is constituted by various self-position estimating devices such as a gyroscope and a camera or a motion estimating device in addition to the GPS.

The external device communication unit 24 also performs a process of transmitting the photographed image of the camera 30 to the PC on the ground.

As described above, in a case where the camera 30 is set to the image transfer mode, the photographed image is input from the camera 30 to the drone main body control device 20 using the mass storage class (MSC) which is the USB data transfer standard.

The drone main body control device 20 transmits the input image from the camera 30 to the PC or the like on the ground through the external device communication unit 24. Note that the photographed image input from the camera 30 may be temporarily stored in the memory 26, and then the image read from the memory 26 may be transmitted to the PC or the like on the ground through the external device communication unit 24.

Further, the external device communication unit 24 also performs a process of transmitting a flight state to a management device such as a base center, and the like.

The memory 26 is used as a storage area of a program executed by the main body control unit 21 and parameters of various processes, a work area for data processing executed by the main body control unit 21, and the like. The timepiece unit 27 has a clock function and a timer function for performing acquisition of a current time, a time measurement process, and the like.

The power supply unit (battery) 28 supplies electric power to the components of the drone main body control device 20.

Next, a configuration example of the camera 30 will be described with reference to Fig. 5.

As illustrated in Fig. 5, the camera 30 includes a camera control unit 31, a lens unit 32, an imaging element (imager) 33, an image processing unit 34, a storage unit 35, a memory 36, a timepiece unit 37, and a communication unit 38. The lens unit 32, the imaging element 33 and the image processing unit 34 may be considered to form in combination an image capturing unit which is configured in operation to capture images of a target photographic area which are stored in the storage unit 35. In some examples the image capturing unit is configured to capture video images and in other examples photographic images which may be high definition images.

The camera control unit 31 controls the processing executed by the camera 30 in general. For example, the camera control unit 31 includes a CPU or the like which executes a program stored in the memory 36, and performs photographing control.

Furthermore, the camera control unit 31 also controls communication with the drone main body control device 20. Further, the camera control unit 31 detects various states of the camera 30 and performs mode switching, that is, switching between the image photographing mode and the image transfer mode in accordance with the state. Further, the camera control unit 31 performs switching between PTP communication and mass storage class (MSC) communication in accordance with each mode.

The mode change process will be described later in detail.

The lens unit 32 and the imaging element (imager) 33 are components for performing image photographing.

The lens unit 32 includes a focus lens, a zoom lens, and the like.

The imaging element (imager) 33 includes a CMOS image sensor, a CCD image sensor, or the like.

The image data computerized by the imaging element (imager) 33 is input to the image processing unit 34.

The image processing unit 34 executes general image processing such as a white balance adjustment and an image compression process. For example, compressed images of a JPEG or MPEG format are generated and stored in the storage unit 35.

The storage unit 35 is constituted by, for example, a flash memory such as an SD card, and the like.

Further, the image stored in the storage unit 35 is output to the drone main body control device 20 side via the communication unit 38 under the control of the control unit 31 after the camera 30 is switched from the image photographing mode to the image transfer mode. This process is performed in accordance with the mass storage class (MSC) which is the USB data transfer standard.

The camera 30 includes no manipulating unit, and various photographing controls such as photographing start, stop, and zoom setting are executed in accordance with the photographing control command input from the drone main body control device 20 via the communication unit 38.

As described above, this control command is transmitted and received between the camera communication unit 23 of the drone main body control device 20 and the communication unit 38 of the camera 30 in accordance with the PTP which is one of USB communication standards.

The memory 36 is used as a storage area of a program executed by the camera control unit 31 and parameters of various processes, a work area of data processing executed by the camera control unit 31, and the like.

The timepiece unit 37 has a clock function and a timer function for performing acquisition of a current time, a time measurement process, and the like.

The communication unit 38 is connected to the camera communication unit 23 of the drone main body control device 20, and in a case where the camera 30 is set to the image photographing mode, the communication unit 38 receives the photographing control information such as the photographing start command, and the like from the drone main body control device 20 in accordance with the USB communication standard (PTP).

Further, if the camera 30 is set to the image transfer mode, the photographed image is output to the drone main body control device 20 in accordance with the mass storage class (MSC) which the USB communication standard. Although the camera could be provided with different interfaces to support the control of the camera according to the PTP and the transfer of the captured images according to the MTC communications protocol, it will be appreciated that using the same interface can reduce component costs and size. Therefore providing a switching between the different modes, the same USB interface can be used for controlling the camera in the image photographing mode and transferring the captured images in the image transfer mode.

### <3. Specific example of switching process between image photographing mode and image transfer mode>

Next, a specific example of the switching process between the image photographing mode and the image transfer mode will be described.

As described above, the camera 30 mounted in the camera-equipped drone 10 autonomously performs switching between the photographing mode and the image transfer mode.

In the image photographing mode, as illustrated in Fig. 6(1), the camera 30 receives various photographing control commands such as the image photographing start, the image photographing stop, and the image photographing setting from the drone main body control device (controller) 20 in accordance with the USB communication standard (PTP), and performs the photographing process.

In the image transfer mode, as illustrated in Fig. 6(2), the camera 30 transfers photographed image to the drone main body control device 20 at a high speed using the mass storage class (MSC) which is the USB data transfer standard.

The drone main body control device 20 further transmits the photographed image data input from the camera 30 to the PC 50.

With a series of processes described above, the user on the ground can immediately check the photographed image of the camera 30 in the sky.

The switching process between the image photographing mode and the image transfer mode by the camera 30 is executed by the camera 30 on the basis of the moving speed of the camera-equipped drone 10, the image photographing interval, or the like.

When the switching process is performed from the image photographing mode to the image transfer mode, the camera 30 disconnects a PTP connection with the drone main body control device 20.

If it is detected that the PTP connection is disconnected, the drone main body control device 20 executes a new device detection process on a USB-connected device, that is, the camera 30.

The drone main body control device 20 performs a device information request (descriptor request) to the camera 30 in the device detection process. In response to the request, the camera 30 transmits device information indicating that it is a mass storage device which performs communication in accordance with a mass storage protocol.

Upon receiving the response, the drone main body control device 20 recognizes the camera 30 as the mass storage device.

After the mode switching, the drone main body control device 20 can read the photographed image data stored in the storage unit 35 of the camera 30 at a high speed in accordance with a communication protocol compatible with the mass storage class (MSC).

The drone main body control device 20 transmits the read photographed image data to the user side device such as the PC on the ground.

With a series of processes described above, the user on the ground can immediately check the photographed image of the camera 30 in the sky.

A specific example of the switching process between the image photographing mode and the image transfer mode by the camera 30 will be described below.

Fig. 7 illustrates a process executed by the drone main body control device 20 on the left side, and illustrates a flow chart for describing a sequence of a process executed by the camera 30 on the right side.

The process (steps S201 to S206) executed by the camera 30 illustrated on the right side is a process of step S104 executed by the drone main body control device 20 on the left side, that is, the process executed during a period of a "process of photographing while flying".

The processes illustrated in the flowcharts will be described below.

Further, the process of the drone main body control device 20 illustrated in the flowchart on the left side is executed under the control of the main body control unit 21 of the drone main body control device 20. For example, the process is executed under the control of the main body control unit 21 including a CPU or the like having a program execution function in accordance with the program stored in the memory 26.

Further, the process of the camera 30 illustrated in the flowchart on the right side is executed under the control of the camera control unit 31 of the camera 30. For example, the process is executed under the control of the camera control unit 31 including a CPU or the like having a program execution function in accordance with the program stored in the memory 36.

First, the process of the drone main body control device 20 will be sequentially described in accordance with the flowchart illustrated on the left side.

### (Step S101)

First, in step S101, the drone main body control device 20 starts moving to a photographing area.

For example, the drone main body control device 20 starts moving to a preset destination while acquiring GPS position information. Further, the position information of the destination is assumed to be already stored in the memory 26 of the drone main body control device 20.

### (Step S102)

Then, in step S102, the drone main body control device 20 acquires the GPS position information.

### (Step S103)

Then, in step S103, the drone main body control device 20 compares the acquired GPS position information with the position information of the destination stored in the memory 26 of the drone main body control device 20, and determines whether or not it arrives at the photographing area.

In a case where it is determined not to arrive at the photographing area, the flight is continued and the position information acquisition process of step S102 is executed continuously.

If it is determined to arrive at the photographing area, the process proceeds to step S104.

### (Step S104)

In a case where it is determined in step S103 that the drone main body control device 20 arrives at the photographing area, in step S104, the photographing process is started.

The main body control unit 21 of the drone main body control device 20 outputs the photographing start command to the camera 30 via the camera communication unit 23 and causes the camera 30 to start the photographing process.

Further, the output of the photographing start command is performed in accordance with the PTP which is the USB communication standard.

The camera 30 receives the photographing start command from the drone main body control device 20 and starts photographing an image.

In the execution period of this photographing process in step S104, the process of the camera 30 illustrated on the right side of Fig. 7 is executed.

The process of the camera 30 will be described later.

### (Step S105)

Then, in step S105, the drone main body control device 20 determines whether or not it arrives at a photographing end point.

The determination process is also executed by comparing position information of the photographing end position stored in the memory 26 of the drone main body control device 20 with the GPS position information.

In a case where it is determined not to arrive at the photographing end point, the photographing process of step S104 is continued.

On the other hand, in a case where it is determined to arrive at the photographing end point, the process proceeds to step S106.

### (Step S106)

In a case where it is determined in step S105 that the drone main body control device 20 arrives at the photographing end point, in step S106, a moving flight process for returning to the base station (drone base) is started.

Next, the process executed by the camera 30 will be described in accordance with the flowchart illustrated on the right side of Fig. 7.

The process flow executed by the camera 30 illustrated on the right side of Fig. 7 is the process executed in the step S104 of the flow executed by the drone main body control device 20 illustrated on the left side, that is, the process executed in the period of the "process of photographing while flying."

Further, the camera 30 is set to the image photographing mode as an initial setting. In other words, the image photographing mode in which it is possible to perform communication with the drone main body control device 20 in accordance with the PTP which is the USB communication standard.

### (Step S201)

First, in step S201, the camera 30 acquires or calculates the moving speed of the camera 30 (= drone) and stores the moving speed in the memory.

The moving speed of the camera 30 (= drone) is input from, for example, the drone main body control device 20. Alternatively, the camera 30 periodically receives the position information acquired on the basis of the GPS by the drone main body control device 20, and calculates the speed by applying the position information and the elapsed time measured by the timepiece unit 37.

The acquired or calculated speed information is stored in the memory 36.

Further, the moving speed information acquisition or calculation processing and the memory storage process are continuously executed at predetermined intervals.

### (Step S202)

Then, in step S202, the camera 30 acquires or calculates the photographing position and the photographing interval in units of images photographed in the camera 30 and stores the photographing position and the photographing interval in the memory.

The position information acquired on the basis of the GPS by the drone main body control device 20 is used as the position information, and the time information measured by the timepiece unit 37 is used as the photographing time information.

Further, as the photographing time information, the measured time information of the timepiece unit 27 of the drone main body control device 20 or the time information attached to the GPS signal may be input and acquired.

The acquired or calculated photographing position and the photographing time information are stored in the memory 36.

Further, the photographing position/photographing interval acquisition or calculation process and the memory storage process are continuously executed at a predetermined interval.

### (Step S203)

Then, in step S203, the camera 30 sets a mode switching condition using at least one of the moving speed, the photographing position, the photographing interval, and such information that are continuously acquired or calculated.

The mode switching condition is a switching condition from the image photographing mode which is the current setting mode of the camera to the image transfer mode.

Specifically, a condition under which image photographing is executed is estimated on the basis of the photographing pattern of every two or more images after the photographing process is started.

For example, in a case where a photographing pattern in which moving and stopping are repeated, an image photographing command is input from the drone main body control device 20 at the stop position, and image photographing is performed is detected, the image photographing can be estimated not to be executed during the movement but to be executed only in the stop period. Further, the image photographing command input from the drone main body control device 20 is a command to be input in accordance with the PTP protocol set in the image photographing mode.

Further, in a case where a photographing pattern in which high-speed movement from the base station to a certain area is performed, and the image photographing is performed at constant intervals while moving after switching to low-speed movement is performed is detected, the image photographing can be estimated not to be executed during the high-speed movement but to be executed only in the low-speed movement period. Further, the image photographing can be estimated to be performed at constant intervals.

As described above, in step S203, the camera 30 estimates the condition under which the image photographing is executed on the basis of the photographing pattern of every two or more images after the photographing process is started.

### (Step S204)

Then, in step S204, the camera 30 starts a mode switching condition satisfaction verification process.

The mode switching condition is a switching condition from the image photographing mode which is the current setting mode of the camera to the image transfer mode.

Further, communication between the drone main body control device 20 and the camera 30 is executed in accordance with the PTP protocol in the image photographing mode and executed in accordance with the mass storage class (MSC) protocol in the image transfer mode.

The mode switching condition satisfaction verification process is executed as a verification process differing depending on the image photographing pattern.

In other words, the verification process in accordance with the photographing pattern determined in step S203 is executed.

A specific verification process example will be described later.

### (Step S205)

After the mode switching condition satisfaction verification process is started in step S204, in step S205, the camera 30 determines whether or not the mode switching condition is satisfied.

In other words, it is determined whether or not the switching condition from the image photographing mode which is the current setting mode of the camera to the image transfer mode is satisfied.

In a case where it is determined that the mode switching condition is not satisfied, the process returns to step S201, and the process of step S201 and subsequent steps is repeatedly executed.

On the other hand, in a case where it is determined that the mode switching condition is satisfied, the process proceeds to step S206.

### (Step S206)

In a case where it is determined in the determination process of step S205 that the switching condition from the image photographing mode which is the current setting mode of the camera to the image transfer mode is satisfied, the process proceeds to step S206. In step S206, the camera control unit 31 of the camera 30 executes the switching process from the image photographing mode which is the current setting mode of the camera to the image transfer mode.

After the mode switching, the drone main body control device 20 executes the process of reading the photographed image data stored in the storage unit 35 of the camera 30 at a high speed in accordance with the communication protocol compatible with the mass storage class (MSC).

The drone main body control device 20 transmits the read photographed image data to the user side device such as the PC on the ground.

With a series of processes described above, the user on the ground can immediately check the photographed image of the camera 30 in the sky.

A specific example of a processing procedure of the mode switching process in step S206 will be described with reference to a flowchart illustrated in Fig. 8.

The flowchart illustrated in Fig. 8 is a flowchart illustrating a detailed example of the processing of step S206 which is the final step of the flow on the right side illustrated in Fig. 7.

A process of each step in the flow illustrated in Fig. 8 will be described.

### (Step S211)

In a case where it is determined in the determination process of step S205 of the flow illustrated in Fig. 7 that the switching condition from the image photographing mode which is the current setting mode of the camera to the image transfer mode is satisfied, in step S211, the camera 30 disconnects the PTP connection (PTP session) with the drone main body control device 20.

### (Step S212)

Then, in step S212, the camera 30 is on standby for an input of a device information acquisition request from the drone main body control device 20 which is the host device.

If the PTP connection is detected to be disconnected, the drone main body control device 20 executes a new device detection process on the USB-connected device, that is, the camera 30.

### (Step S213)

In step S213, the camera 30 determines whether or not the device information acquisition request from the drone main body control device 20 is received and continues the standby process of step S212 in a case where the device information acquisition request is not received.

On the other hand, in a case where it is determined that the device information acquisition request from the drone main body control device 20 is received, the process proceeds to step S214.

### (Step S214)

In step S214, the camera 30 transmits the device information (descriptor) indicating that it is a mass storage device which performs communication in accordance with the mass storage protocol to the drone main body control device 20 as a response to the device information acquisition request from the drone main body control device 20.

Upon receiving the response, the drone main body control device 20 recognizes the camera 30 as the mass storage device and executes subsequent communication in accordance with the communication protocol compatible with the mass storage class (MSC).

After the mode switching, the drone main body control device 20 executes the process of reading the photographed image data stored in the storage unit 35 of the camera 30 at a high speed in accordance with the communication protocol compatible with the mass storage class (MSC).

The drone main body control device 20 transmits the read photographed image data to the user side device such as the PC on the ground.

With a series of processes described above, the user on the ground can immediately check the photographed image of the camera 30 in the sky. According to some examples the camera may be provided with a position sensor such as a GPS unit in order to detect its position and therefore determine whether it should capture images or video of a photographic area at a desired location according to prestored location coordinates. However reconnaissance vehicles such as drones are conventionally provided with position sensors such as GPS receivers in order to estimate their location and follow a flight path autonomously. Accordingly by arranging for control information communicated from the drone control body unit to the cameras via the USB interface to include position information, the camera can be configured to determine its location and speed using the GPS receiver of the drone, thereby reducing a cost of the camera.

### <4. Setting of mode switching condition according to various photographing situations and specific example of mode switching process>

Next, a setting of the mode switching condition according to various photographing situations and the specific example of the mode switching process will be described.

The following three process examples are sequentially described:
(first process example) a process example in which the moving speed and the photographing process stop period are used as a mode switching determination condition;
(second process example) a process example in which the current position and the photographing process stop period are used as the mode switching determination condition; and
(third process example) a process example in which the moving speed is used as the mode switching determination condition. The three process examples will be described.

### <4-1. (First process example) process example in which moving speed and photographing process stop period are used as mode switching determination condition>

First, a process example in which the moving speed and the photographing process stop period are used as a mode switching determination condition will be described as a first process example.

The first process example is a process example in a case where the camera-equipped drone 10 moves from a base station (base) 80 to a current photographing area 70 at a high speed, switches to the low-speed movement after arriving at the current photographing area 70, and photographs images at constant intervals while performing the low-speed movement in the current photographing area 70 as illustrated in Fig. 9.

The camera-equipped drone 10 moves from the base station (base) 80 to the current photographing area 70, and performs image photographing in accordance with a prespecified flight route at photographing intervals prespecified on the flight route.

Further, the movement route to the current photographing area 70, the flight route in the current photographing area 70, the photographing timing, and the like are all recorded in the program stored in the memory 26 of the drone main body control device 20.

The drone main body control device 20 sequentially outputs the position information to the camera 30, and outputs a photographing execution command or photographing setting information such as focus and zoom settings at a photographing execution timing of each image, and the camera 30 executes the photographing process according to the input information.

The camera-equipped drone 10 starts the photographing from a photographing start point of the current photographing area 70 and executes the image photographing process in accordance with a prespecified program up to the photographing end point of the current photographing area 70.

If the image photographing is completed, the camera-equipped drone 10 moves to the base station (base) 80 and lands.

The first process example is a process example in which the moving speed of the camera-equipped drone 10 and the photographing process stop period are used as the mode switching determination condition.

A processing sequence executed by the camera 30 in the first process example will be described with reference to a flowchart illustrated in Fig. 10.

The flowchart illustrated in Fig. 10 is a process flow similar to the process flow (steps S201 to S206) of the camera described above with reference to the flow on the right side of Fig. 7.

A process of steps S201 to S204 and step S206 in the flow illustrated in Fig. 10 is a process corresponding to the process of steps S201 to S204 and step S206 in the flow illustrated in Fig. 7.

A process of steps S231 to S232 of the flow illustrated in Fig. 10 corresponds to the process of step S205 of the flow illustrated in Fig. 7, and is the first process example, that is, a process executed in which the current moving speed and the photographing process stop period are used as the mode switching determination condition.

A process of each step of the flow illustrated in Fig. 10 will be described.

### (Steps S201 to S204)

A process of steps S201 to S204 corresponds to the process of steps S201 to S204 described above with reference to Fig. 7.

These processes will be briefly described.

First, in step S201, the camera 30 acquires or calculates the moving speed of the camera 30 (= drone) and stores the moving speed in the memory.

Then, in step S202, the photographing position and the photographing interval are acquired or calculated in units of images photographed in the camera 30 and stored in the memory.

Then, in step S203, the mode switching condition is set using at least one of the acquired information (the speed, the photographing position, and the photographing interval) and such information.

The present process example is a process example in a case where the camera-equipped drone 10 moves from a base station (base) 80 to a current photographing area 70 at a high speed, switches to the low-speed movement after arriving at the current photographing area 70, and photographs images at constant intervals while performing the low-speed movement in the current photographing area 70 as described above with reference to Fig. 9.

In this case, the camera 30 detects that the image is being photographed at constant intervals while performing the low-speed movement after switching to the low-speed movement. On the basis of the detection information, the camera 30 determines that the image photographing is performed at constant intervals while performing the low-speed movement, and determines that the image photographing pattern has the following setting:
the image photographing is performed only at the time of low-speed movement; and
the image photographing is performed at constant intervals.

On the basis of the image photographing pattern, the following conditions are set as the condition for switching the image photographing mode to the image transfer mode:
(first condition) the camera-equipped drone starts the high-speed movement; and
(second condition) the image photographing interval exceeds a certain time.

In a case where any one of the conditions is satisfied, the image photographing mode is switched to the image transfer mode.

In step S203, the mode switching condition is set.

Then, in step S204, the satisfaction verification process for the mode switching condition set in step S203 is started.

The first process example is a process example in which the current moving speed and the photographing process stop period are used as the mode switching determination condition, and the determination process is the process of steps S231 to S232.

These processes will be described.

### (Step S231)

First, in step S231, the camera 30 determines whether or not the current moving speed (Vc) of the camera 30 exceeds a specified speed (Vth).

Further, the current moving speed (Vc) of the camera 30 is equal to the current moving speed of the camera-equipped drone 10.

The specified speed (Vth) information used as a threshold value is, for example, a speed between a speed at the time of high-speed movement from the base station 80 illustrated in Fig. 9 to the current photographing area 70 and a speed at the time of low-speed movement after the photographing is started in the current photographing area 70.

The specified speed (Vth) information used as a threshold value is stored in the memory 36 of the camera 30 in advance. For example, the specified speed (Vth) information is stored when the mode switching condition is set in step S203.

Further, the camera 30 sequentially calculates a current speed (Vc) of the camera 30 (= drone) using the GPS position information or the like input from the drone main body control device 20.

Using such information, the camera 30 determines whether or not the current moving speed (Vc) of the camera 30 exceeds the specified speed (Vth).

In a case where it is determined that the current moving speed (Vc) of the camera 30 does not exceed the specified speed (Vth), the process proceeds to step S232.

On the other hand, in a case where it is determined that the current moving speed (Vc) of the camera 30 exceeds the specified speed (Vth), the process proceeds to step S206, and the switching process from the image photographing mode which is the current setting mode of the camera to the image transfer mode is executed.

### (Step S232)

In a case where it is determined in the determination process of step S231 that the current moving speed (Vc) of the camera 30 exceeds the specified speed (Vth), the process proceeds to step S232.

In step S232, the camera 30 determines whether or not the stop period (Tc) of the image photographing process exceeds a specified period (Tth) which is a prespecified threshold value.

As described above, the camera 30 photographs each image in accordance with the photographing execution command from the drone main body control device 20. In other words, in the image photographing mode, the camera 30 receives the command from drone main body control device 20 via a PTP communication session established as a communication session between the drone main body control device 20 and the camera 30, and performs the photographing.

The camera 30 measures the stop period of the input of the photographing command from the drone main body control device 20 through the timepiece unit 37 and determines whether or not the stop period of the input of the photographing command (= the stop period (Tc) of the image photographing process) exceeds the specified period (Tth) which is a prespecified threshold time.

In a case where it is determined that the stop period (Tc) of the image photographing process exceeds the specified period (Tth) which is the prespecified threshold time, the process proceeds to step S206, and the switching process from the image photographing mode which is the current setting mode of the camera to the image transfer mode is executed.

On the other hand, in a case where it is determined that the stop period (Tc) of the image photographing process does not exceed the specified period (Tth) which is the prespecified threshold time, the process returns to step S201.

### (Step S206)

In a case where it is determined in the determination process of steps S231 to S232 that the switching condition from the image photographing mode which is the current setting mode of the camera to the image transfer mode is satisfied, the process proceeds to step S206. In step S206, the camera control unit 31 of the camera 30 executes the switching process from the image photographing mode which is the current setting mode of the camera to the image transfer mode.

A correspondence relation between the determination processes of steps S231 to S232 and whether or not the mode switching is executed will be described with reference to Fig. 11.

Fig. 11 illustrates processes based on a combination of the following two determination steps (Yes/No):
on the left side, the determination process of step S231, that is, the determination process of whether or not the current moving speed (Vc) exceeds the specified speed (Vth); and
on the upper side, the determination process of step S232, that is, the determination process of whether or not the photographing process stop period (Tc) exceeds the specified period (Tth)

As illustrated in Fig. 11, in a case where the determination process of step S231 on the left is Yes, that is, in a case where it is determined that the current moving speed (Vc) exceeds the specified speed (Vth), the switching process from the image photographing mode which is the current setting mode of the camera to the image transfer mode is executed regardless of the determination process result of step S232 (regardless of whether or not the photographing process stop period (Tc) exceeds the specified period (Tth)).

On the other hand, in a case where the determination process of step S231 on the left side is No, that is, in a case where it is determined that the current moving speed (Vc) does not exceed the specified speed (Vth), a process to be executed differs depending on the determination process result of step S232 as follows.

In a case where the determination result of step S232 is Yes, that is, in a case where it is determined that the photographing process stop period (Tc) exceeds the specified period (Tth),
it is determined that the photographing ends or is stopped, and the switching process from the image photographing mode which is the current setting mode of the camera to the image transfer mode.

On the other hand, in a case where the determination result of step S232 is No, that is, in a case where it is determined that the photographing process stop period (Tc) does not exceed the specified period (Tth), it is determined that the photographing is in progress and the image photographing mode which is the current setting mode of the camera is continued.

As described above, after the mode switching of step S206, the drone main body control device 20 reads the photographed image data stored in the storage unit 35 of the camera 30 at a high speed in accordance with the communication protocol compatible with the mass storage class (MSC) and transmits the photographed image data to the user side device such as the PC on the ground.

With a series of processes described above, the user on the ground can immediately check the photographed image of the camera 30 in the sky.

### <4-2. (Second process example) process example in which current position and photographing process stop period are used as the mode switching determination condition>

Next, a process example in which the current position and the photographing process stop period are used as the mode switching determination condition will be described as a second process example.

The second process example is a process example in a case where the camera-equipped drone 10 moves from a base station (base) 80 to a current photographing area 70 at a high speed, switches to the low-speed movement after arriving at the current photographing area 70, and photographs images at constant intervals while performing the low-speed movement in the current photographing area 70 as illustrated in Fig. 9, similarly to the first process example described above.

In the second process example, the position information of the current photographing area 70 is used as the mode switching condition instead of the speed information.

For example, as illustrated in Fig. 9, the current photographing area 70 is specified in advance.

The current photographing area 70 illustrated in Fig. 9 is specified as a rectangular area of (latitude a, longitude b) to (latitude c, longitude d).

The camera-equipped drone 10 moves from the base station (base) 80 to the current photographing area 70, and performs the image photographing in accordance with a prespecified flight route at photographing intervals prespecified on the flight route.

Further, the movement route to the current photographing area 70, the flight route in the current photographing area 70, the photographing timing, and the like are all recorded in the program stored in the memory 26 of the drone main body control device 20.

The drone main body control device 20 sequentially outputs the position information to the camera 30, and outputs a photographing execution command or photographing setting information such as focus and zoom settings at a photographing execution timing of each image, and the camera 30 executes the photographing process according to the input information.

The camera-equipped drone 10 starts the photographing from a photographing start point of the current photographing area 70 and executes the image photographing process in accordance with a prespecified program up to the photographing end point of the current photographing area 70.

If the image photographing is completed, the camera-equipped drone 10 moves to the base station (base) 80 and lands.

The second process example is a process example in which the current position of the camera-equipped drone 10 and the photographing process stop period are used as the mode switching determination condition.

A processing sequence executed by the camera 30 in the second process example will be described with reference to a flowchart illustrated in Fig. 12.

The flowchart illustrated in Fig. 12 is a process flow similar to the process flow (steps S201 to S206) of the camera described above with reference to the flow on the right side of Fig. 7.

A process of steps S201 to S204 and step S206 in the flow illustrated in Fig. 12 is a process corresponding to the process of steps S201 to S204 and step S206 in the flow illustrated in Fig. 7.

A process of steps S231b and S232 of the flow illustrated in Fig. 12 corresponds to the process of step S205 of the flow illustrated in Fig. 7, and is the second process example, that is, a process executed in which the current position and the photographing process stop period are used as the mode switching determination condition.

A process of each step of the flow illustrated in Fig. 12 will be described.

### (Steps S201 to S204)

A process of steps S201 to S204 corresponds to the process of steps S201 to S204 described above with reference to Fig. 7.

These processes will be briefly described.

First, in step S201, the camera 30 acquires or calculates the moving speed of the camera 30 (= drone) and stores the moving speed in the memory.

Then, in step S202, the photographing position and the photographing interval are acquired or calculated in units of images photographed in the camera 30 and stored in the memory.

Then, in step S203, the mode switching condition is set using at least one of the acquired information (the speed, the photographing position, and the photographing interval) and such information.

In the present process example is a process example in a case where the camera-equipped drone 10 moves from a base station (base) 80 to a current photographing area 70 at a high speed, switches to the low-speed movement after arriving at the current photographing area 70, and photographs images at constant intervals while performing the low-speed movement in the current photographing area 70 as described above with reference to Fig. 9.

In the second process example, the photographing area information is stored in the memory 36 of the camera. For example, in the example illustrated in Fig. 9, it is the area of the current photographing area 70, that is, a rectangular area from (latitude a, longitude b) to (latitude c, longitude d).

The camera 30 stores the photographing area information (the rectangular area information of (latitude a, longitude b) to (latitude c, longitude d)) in the memory 36 as the photographing area information.

In the second process example, the image photographing is performed only within a predetermined photographing area (the rectangular area of (latitude a, longitude b) to (latitude c, longitude d)).

Further, the image photographing is performed at constant intervals.

On the basis of these image photographing patterns, the camera 30 sets the following conditions as the condition for switching the image photographing mode to the image transfer mode:
(First condition) the position of the camera-equipped drone is outside the photographing area; and
(Second condition) the image photographing interval exceeds a certain time.

In a case where any one of the conditions is satisfied, the image photographing mode is switched to the image transfer mode.

In step S203, the mode switching condition is set.

Then, in step S204, the mode switching condition satisfaction verification process is started.

The mode switching condition is the switching condition from the image photographing mode which is the current setting mode of the camera to the image transfer mode.

The second process example is a process example in which the current position and the photographing process stop period are used as the mode switching determination condition, and this determination process is the process of steps S231b and S232.

These processes will be described.

### (Step S231b)

First, in step S231b, the camera 30 determines whether or not a current position (Lc) of the camera 30 is within a current photographing area (Lp).

Further, the current position (Lc) of the camera 30 coincides with the current position of the camera-equipped drone 10.

The camera 30 receives the photographing area information (Lp) from the drone main body control device 20 in advance and further periodically receives the position information acquired on the basis of the GPS by the drone main body control device 20.

For example, in the example illustrated in Fig. 9, the photographing area information (Lp) is the area of the current photographing area 70, that is, the rectangular area of (latitude a, longitude b) to (latitude c, longitude d).

The camera 30 compares the photographing area information (Lp = the rectangle area information of (latitude a, longitude b) to (latitude c, longitude d)) with the position information acquired on the basis of the GPS by the drone main body control device 20, and determines whether or not the current position (Lc) of the camera 30 is within the current photographing area (Lp).

In a case where it is determined that the current position (Lc) of the camera 30 is within the current photographing area (Lp), the process proceeds to step S232.

On the other hand, in a case where it is determined that the current position (Lc) of the camera 30 is outside the current photographing area (Lp), the process proceeds to step S205, and the switching process from the image photographing mode which is the current setting mode of the camera to the image transfer mode is executed.

### (Step S232)

In a case where it is determined in the determination process of step S231b that the current position (Lc) of the camera 30 is within the current photographing area (Lp), the process proceeds to step S232.

In step S232, the camera 30 determines whether or not the stop period (Tc) of the image photographing process exceeds the specified period (Tth) which is a prespecified threshold value.

As described above, the camera 30 photographs each image in accordance with the photographing execution command from the drone main body control device 20. In other words, in the image photographing mode, the camera 30 receives the command from drone main body control device 20 via a PTP communication session established as a communication session between the drone main body control device 20 and the camera 30, and performs the photographing.

The camera 30 measures the stop period of the input of the photographing command from the drone main body control device 20 through the timepiece unit 37 and determines whether or not the stop period of the input of the photographing command (= the stop period (Tc) of the image photographing process) exceeds the specified period (Tth) which is a prespecified threshold time.

In a case where it is determined that the stop period (Tc) of the image photographing process exceeds the specified period (Tth) which is the prespecified threshold time, the process proceeds to step S206, and the switching process from the image photographing mode which is the current setting mode of the camera to the image transfer mode is executed.

On the other hand, in a case where it is determined that the stop period (Tc) of the image photographing process does not exceed the specified period (Tth) which is the prespecified threshold time, the process returns to step S201.

### (Step S206)

In a case where it is determined in the determination process of steps S231b and S232 that the switching condition from the image photographing mode which is the current setting mode of the camera to the image transfer mode is satisfied, the process proceeds to step S206. In step S206, the camera control unit 31 of the camera 30 executes the switching process from the image photographing mode which is the current setting mode of the camera to the image transfer mode.

A correspondence relation between the determination processes of steps S231b and S232 and whether or not the mode switching is executed will be described with reference to Fig. 13.

Fig. 13 illustrates processes based on a combination of the following two determination steps (Yes/No):
on the left side, the determination process of step S231b, that is, the determination process of whether or not the current position (Lc) is within the current photographing area (Lp); and
on the upper side, the determination process of step S232, that is, the determination process of whether or not the photographing process stop period (Tc) exceeds the specified period (Tth).

As illustrated in Fig. 13, in a case where the determination process of step S231b on the left is Yes, that is, in a case where it is determined that the current position (Lc) is within the current photographing area (Lp), a process to be executed differs depending on the determination process result of step S232 as follows.

In a case where the determination result of step S232 is Yes, that is, in a case where it is determined that the photographing process stop period (Tc) exceeds the specified period (Tth),
it is determined that the photographing ends or is stopped, and the switching process from the image photographing mode which is the current setting mode of the camera to the image transfer mode.

On the other hand, in a case where the determination result of step S232 is No, that is, in a case where it is determined that the photographing process stop period (Tc) does not exceed the specified period (Tth),
it is determined that the photographing is in progress and the image photographing mode which is the current setting mode of the camera is continued.

In addition, in a case where the determination result of step S231b is No, that is, in a case where it is determined that the current position (Lc) is not within the current photographing area (Lp), the switching process from the image photographing mode which is the current setting mode of the camera to the image transfer mode is executed regardless of the determination process result of step S232.

As described above, after the mode switching of step S206, the drone main body control device 20 reads the photographed image data stored in the storage unit 35 of the camera 30 at a high speed in accordance with the communication protocol compatible with the mass storage class (MSC) and transmits the photographed image data to the user side device such as the PC on the ground.

With a series of processes described above, the user on the ground can immediately check the photographed image of the camera 30 in the sky.

### <4-3. (Third process example) process example in which only moving speed is used as mode switching determination condition>

Next, a process example in which only the moving speed is used as the mode switching determination condition will be described as a third process example.

The third process example is a process example usable in a case where the photographing process is performed under the condition that the image photographing is performed only in a case where the flying speed of the camera-equipped drone 10 is equal to or less than a certain speed.

For example, a photographing object 90 is assumed to be specified in advance as illustrated in Fig. 14. Further, it is assumed that Pa, Pb, Pc and Pd are specified as the photographing positions in advance, and the number of image photographing at each photographing position is also specified as illustrated in Fig. 14. The following setting is performed:
two images are photographed at the photographing position Pa;
three images are photographed at the photographing position Pb;
one image is photographed at the photographing position Pc; and
two images are photographed at the photographing position Pd,

The camera-equipped drone 10 moves from the base station (base) 80 to the photographable area of the photographing object 90 and performs the image photographing in accordance with a prespecified flight route at a prespecified position on the flight route.

Further, the movement route to the photographing object 90, the flight route around the photographing object 90, the photographing timing, and the like are all recorded in the program stored in the memory 26 of the drone main body control device 20.

The drone main body control device 20 sequentially outputs the position information to the camera 30, and outputs a photographing execution command or photographing setting information such as focus and zoom settings at a photographing execution timing of each image, and the camera 30 executes the photographing process according to the input information.

The camera-equipped drone 10 executes an image photographing process according to a pre-specified program at each of the photographing point Pa to Pd of the photographing object 90. If the image photographing is completed, the camera-equipped drone 10 moves to the base station (base) 80 and lands.

The third process example is a process example in which only the moving speed of camera-equipped drone 10 is used as the mode switching determination condition.

A processing sequence executed by the camera 30 in the third process example will be described with reference to a flowchart illustrated in Fig. 15.

The flowchart illustrated in Fig. 15 is a process flow similar to the process flow (steps S201 to S206) of the camera described above with reference to the flow on the right side of Fig. 7.

A process of steps S201 to S204 and step S206 in the flow illustrated in Fig. 15 is a process corresponding to the process of steps S201 to S204 and step S206 in the flow illustrated in Fig. 7.

The process of step S251 of the flow illustrated in Fig. 15 corresponds to the process of step S205 of the flow illustrated in Fig. 7, and is the third process example, that is, a process executed in which only the current moving speed is used as the mode switching determination condition.

A process of each step of the flow illustrated in Fig. 15 will be described.

### (Steps S201 to S204)

A process of steps S201 to S204 corresponds to the process of steps S201 to S204 described above with reference to Fig. 7.

These processes will be briefly described.

First, in step S201, the camera 30 acquires or calculates the moving speed of the camera 30 (= drone) and stores the moving speed in the memory.

Then, in step S202, the photographing position and the photographing interval are acquired or calculated in units of images photographed in the camera 30 and stored in the memory.

Then, in step S203, the mode switching condition is set using at least one of the acquired information (the speed, the photographing position, and the photographing interval) and such information.

The present process example is a process example in which the camera-equipped drone 10 moves from the base station (base) 80 to the photographing object 90 at a high speed, switches to the low-speed movement after arriving near the photographing object 90, and photographs an image of the photographing object 90 at a predetermined position as described above with reference to Fig. 14.

In this case, the camera 30 detects that the image is being photographed while performing the low-speed movement after switching to the low-speed movement or a stopped state. On the basis of this detection information, the camera 30 determines that image photographing is performed only at a predetermined moving speed or less and determines that the image photographing pattern has the following setting:
the image photographing is performed while moving at a certain speed or less or in a stopped state.

On the basis of the image photographing pattern, the following conditions are set as the condition for switching the image photographing mode to the image transfer mode:
(first condition) the camera-equipped drone starts the high-speed movement.

In a case where any one of the conditions is satisfied, the image photographing mode is switched to the image transfer mode. In step S203, the mode switching condition is set.

Then, in step S204, the mode switching condition satisfaction verification process is started.

The mode switching condition is the switching condition from the image photographing mode which is the current setting mode of the camera to the image transfer mode.

The third process example is a process example in which the current moving speed is used as the mode switching determination condition, and this determination process is the process of step S251. This process will be described.

### (Step S251)

First, in step S251, the camera 30 determines whether or not the current moving speed (Vc) of the camera 30 exceeds a specified speed (Vth).

Further, the current moving speed (Vc) of the camera 30 is equal to the current moving speed of the camera-equipped drone 10.

The specified speed (Vth) information used as a threshold value is, for example, a speed between a speed at the time of high-speed movement from the base station 80 illustrated in Fig. 14 to the photographing object 90 and a speed at the time of low-speed movement after the photographing is started.

The specified speed (Vth) information used as a threshold value is stored in the memory 36 of the camera 30 in advance. For example, the specified speed (Vth) information is stored when the mode switching condition is set in step S203.

Further, the camera 30 sequentially calculates a current speed (Vc) of the camera 30 (= drone) using the GPS position information or the like input from the drone main body control device 20.

Using such information, the camera 30 determines whether or not the current moving speed (Vc) of the camera 30 exceeds the specified speed (Vth).

In a case where it is determined that the current moving speed (Vc) of the camera 30 does not exceed the specified speed (Vth), the process returns to step S201.

On the other hand, in a case where it is determined that the current moving speed (Vc) of the camera 30 exceeds the specified speed (Vth), the process proceeds to step S206, and the switching process from the image photographing mode which is the current setting mode of the camera to the image transfer mode is executed.

### (Step S206)

In a case where it is determined in the determination process of step S251 that the switching condition from the image photographing mode which is the current setting mode of the camera to the image transfer mode is satisfied, the process proceeds to step S206. In step S206, the camera control unit 31 of the camera 30 executes the switching process from the image photographing mode which is the current setting mode of the camera to the image transfer mode.

A correspondence relation between the determination process of step S251 and whether or not the mode switching is executed will be described with reference to Fig. 16.

Fig. 16 illustrates processes based on a combination of the following one determination steps (Yes/No):
on the left side, the determination process of step S251, that is, the determination process of whether or not the current moving speed (Vc) exceeds the specified speed (Vth).

As illustrated in Fig. 16, in a case where it is determined that the determination process of step S251 on the left is Yes, that is, in a case where it is determined that the current moving speed (Vc) exceeds the specified speed (Vth), the switching process from the image photographing mode which is the current setting mode of the camera to the image transfer mode is executed.

On the other hand, in a case where it is determined that the determination process of step S251 on the left is No, that is, in a case where it is determined that the current moving speed (Vc) does not exceed the specified speed (Vth), it is determined that the photographing is in progress, and the image photographing mode which is the current setting mode of the camera is continued.

As described above, after the mode switching of step S206, the drone main body control device 20 reads the photographed image data stored in the storage unit 35 of the camera 30 at a high speed in accordance with the communication protocol compatible with the mass storage class (MSC) and transmits the photographed image data to the user side device such as the PC on the ground.

With a series of processes described above, the user on the ground can immediately check the photographed image of the camera 30 in the sky.

Note that, in addition to the above-described three process examples, that is, the following process examples:
(first process example) a process example in which the moving speed and the photographing process stop period are used as a mode switching determination condition;
(second process example) a process example in which the current position and the photographing process stop period are used as the mode switching determination condition; and
(third process example) a process example in which the moving speed is used as the mode switching determination condition.

The mode switching determination condition can be variously set in addition to the above process examples. For example, it is possible to set at least one of the moving speed, the photographing process stop period, and the current position as the mode switching determination condition, and it is also possible to set an arbitrary combination of the moving speed, the photographing process stop period, and the current position as the mode switching determination condition.

For example, in the configuration in which only the photographing process stop period is used as the mode switching determination condition, in a case where the photographing process stop period of the specified period or more occurs, switching from the image photographing mode to the image transfer mode is executed.

Further, in the configuration in which only the current position is used as the mode switching determination condition, in a case where the current position deviates from a preset photographing area, switching from the image photographing mode to the image transfer mode is executed.

Such a setting is performed.

### <5. Conclusion of configuration of present disclosure>

The embodiment of the present disclosure has been described in detail with reference to a specific embodiment. However, it is evident that those skilled in the art can make modifications or substitutions of the embodiment without departing from the scope of protection of the present disclosure as set forth in the claims In other words, the present disclosure has been disclosed in the form of an example and should not be interpreted restrictively. In order to determine the scope of protection of the present disclosure, claims set forth below should be taken into consideration.

Further, a series of processing described in the specification can be executed by hardware, software, or a combined configuration of both. In a case where a process is executed by software, it is possible to install a program having a processing sequence recorded therein in a memory in a computer incorporated into dedicated hardware and execute the program or install the program in a general-purpose computer capable of executing various kinds of processes and execute the program. For example, the program may be recorded in a recording medium in advance. Instead of installing the program from the recording medium into the computer, the program may be received via a network such as a local area network (LAN), the Internet, or the like and installed in the recording medium such as an internal hard disk.

Further, various kinds of processes described in the specification may be chronologically executed in accordance with the description or may be executed in parallel or separately in accordance with a processing capability of a device which executes the process or if necessary. Further, in this specification, a "system" is a logical aggregate configuration of a plurality of devices and not limited to a configuration in which devices of respective configurations are in the same housing.

### [Industrial Applicability]

As described above, according to a configuration of an embodiment of the present disclosure, a configuration in which switching between an image photographing mode and an image transfer mode is performed in accordance with whether or not a mode switching condition is satisfied, and communication according to a different communication protocol is performed in each mode is implemented. Specifically, for example, a control unit which executes mode switching between the image photographing mode and the image transfer mode is provided, and the control unit determines whether or not a prespecified mode switching condition is satisfied and executes a process of performing switching from the image photographing mode to the image transfer mode in a case where the mode switching condition is satisfied. In the image photographing mode, communication according to a picture transfer protocol (PTP) is executed with a connected drone main body control device, and in the image transfer mode, communication according to a mass storage class (MSC) is executed with the connected drone main body control device.

With the present configuration, the configuration in which switching between the image photographing mode and the image transfer mode is performed in accordance with whether or not the mode switching condition is satisfied, and the communication according to the different communication protocol is performed in each mode is implemented.

It should be understood by those skilled in the art that various modifications, combinations, sub-combinations and alterations may occur depending on design requirements and other factors insofar as they are within the scope of the appended claims.

### [Reference Signs List]

- 10: Camera-equipped drone
- 20: Drone main body control device
- 21: Main body control unit
- 22: Flight control unit
- 23: Camera communication unit
- 24: External device communication unit
- 25: Sensor
- 26: Memory
- 27: Timepiece unit
- 28: Power supply unit
- 30: Camera
- 31: Camera control unit
- 32: Lens unit
- 33: Imaging element
- 34: Image processing unit
- 35: Storage unit
- 36: Memory
- 37: Timepiece unit
- 38: Communication unit

## Claims

1. An imaging device (30) of a reconnaissance vehicle (10), the imaging device comprising:
an image capturing unit (32, 33, 34) configured when activated to capture photographic or video images of a photographic area,
a storage unit (35) configured to store the photographic or video images generated by the imaging device, and
a control unit (31) configured to communicate via a communications interface with a reconnaissance vehicle main body control device (20) of the reconnaissance vehicle,
wherein the control unit is configured to operate in an image photographing mode in which the control unit is configured to receive control information from the reconnaissance vehicle main body control device of the reconnaissance vehicle and in an image transfer mode in which the control unit is configured to transfer the photographic or video images from the storage unit to the reconnaissance vehicle main body control device of the reconnaissance vehicle,
wherein the control unit is configured in response to detecting mode switching conditions to switch autonomously from the image photographing mode to the image transfer mode to transfer the one or more photographic or video images to the reconnaissance vehicle main body control device of the reconnaissance vehicle,
wherein the mode switching conditions comprise one or more of a position of the reconnaissance vehicle, a speed of the reconnaissance vehicle, and an image photographing interval of the imaging device.

2. The imaging device according to claim 1, wherein the position of the reconnaissance vehicle is outside the photographic area.

3. The imaging device according to claim 1, wherein the imaging device executes communication in accordance with different communication protocols in the image photographing mode and the image transfer mode.

4. The imaging device according to claims 1, 2 or 3 further comprising a communication unit that executes communication according to a picture transfer protocol (PTP) in the image photographing mode and executes communication according to a mass storage class (MSC) in the image transfer mode.

5. The imaging device according to claim 4,
wherein the communication unit is a communication unit that communicates with a reconnaissance vehicle main body control device.

6. The imaging device according to any of claims 1 to 5,
wherein the control unit sets the mode switching condition on the basis of an image photographing pattern, and executes a mode switching condition satisfaction verification process as a process of determining whether or not the set mode switching condition is satisfied.

7. The imaging device according to any of claims 1 to 6,
wherein the control unit determines whether or not the mode switching condition is satisfied using information of at least one of a moving speed, an image photographing interval, and an image photographing position of the imaging device.

8. The imaging device according to any of claims 1 to 7,
wherein the control unit executes a process of acquiring the information of the at least one of the moving speed, the image photographing interval, and the image photographing position of the imaging device, and determines whether or not the mode switching condition is satisfied using the acquired information.

9. The imaging device according to any of claims 1 to 8,
wherein, in a case where the mode switching condition is detected to be satisfied,
the control unit stops a picture transfer protocol (PTP) connection with a host device connected via a communication unit, and transmits a response including device information indicating a mass storage class (MSC) device in response to reception of a device information acquisition request from the host device.

10. A reconnaissance vehicle including:
a reconnaissance vehicle main body control device that performs flight control of the reconnaissance vehicle and photographing control of an imaging device connected via a communication unit; and
an imaging device according to any of claims 1 to 9, including an imaging device control unit, that executes image photographing in accordance with an input command from the reconnaissance vehicle main body control device, in which the imaging device executes a mode switching condition satisfaction verification process of determining whether or not a pre-specified mode switching condition is satisfied, executes a mode switching process from an image photographing mode to an image transfer mode in a case where the mode switching condition is detected to be satisfied, and performs a process of switching a communication protocol with the reconnaissance vehicle main body control device together with the mode switching process.

11. A mode control method executed in an imaging device according to any of claims 1 to **9,** including:
executing, by the control unit, a mode switching condition satisfaction verification process or
determining whether or not a pre-specified mode switching condition is satisfied; and
executing, by the control unit, a mode switching process from the image photographing mode to the image transfer mode in a case where the mode switching condition is detected to be satisfied.

12. A mode control method executed in a reconnaissance vehicle according to claim 10, including:
executing, by the imaging device, a mode switching condition satisfaction verification process of determining whether or not a pre-specified mode switching condition is satisfied;
executing, by the imaging device, a mode switching process from an image photographing mode to an image transfer mode in a case where the mode switching condition is detected to be satisfied; and
performing, by the imaging device, a process of switching a communication protocol with the reconnaissance vehicle main body control device together with the mode switching process.

13. A programme causing an imaging device according to any of claims 1 to 9 to execute a mode control process, the imaging device including a control unit that executes mode switching between an image photographing mode and an image transfer mode, the programme causing the control unit to execute:
a mode switching condition satisfaction verification process of determining whether or not a pre-specified mode switching condition is satisfied; and
a mode switching process from the image photographing mode to the image transfer mode in a case where the mode switching condition is detected to be satisfied.

## Patentansprüche

1. Bildgebungsvorrichtung (30) eines Aufklärungsfahrzeugs (10), die Bildgebungsvorrichtung umfassend:
eine Bildaufnahmeeinheit (32, 33, 34), die bei Aktivierung konfiguriert ist, um Foto- oder Videobilder eines fotografischen Bereichs aufzunehmen,
eine Speichereinheit (35), die konfiguriert ist, um die Foto- oder Videobilder, die durch die Bildgebungsvorrichtung erzeugt werden, zu speichern, und eine Steuereinheit (31), die konfiguriert ist, um über eine Kommunikationsschnittstelle mit einer Aufklärungsfahrzeughauptkarosseriesteuervorrichtung (20) des Aufklärungsfahrzeugs zu kommunizieren,
wobei die Steuereinheit konfiguriert ist, um in einem Bildfotografiermodus, in dem die Steuereinheit konfiguriert ist, um Steuerinformationen von der Aufklärungsfahrzeughauptkarosseriesteuervorrichtung des Aufklärungsfahrzeugs zu empfangen, und in einem Bildübertragungsmodus in Betrieb zu sein, in dem die Steuereinheit konfiguriert ist, um die Foto- oder Videobilder von der Speichereinheit an die Aufklärungsfahrzeughauptkarosseriesteuervorrichtung des Aufklärungsfahrzeugs zu übertragen,
wobei die Steuereinheit konfiguriert ist, um als Reaktion auf ein Erkennen von Modusumschaltbedingungen von dem Bildfotografiermodus in den Bildübertragungsmodus autonom umzuschalten, um das eine oder die mehreren Foto- oder Videobilder an die Aufklärungsfahrzeughauptkarosseriesteuervorrichtung des Aufklärungsfahrzeugs zu übertragen,
wobei die Modusumschaltbedingungen eines oder mehrere umfassen von einer Position des Aufklärungsfahrzeugs, einer Geschwindigkeit des Aufklärungsfahrzeugs und einem Bildfotografierintervall der Bildgebungsvorrichtung.

2. Bildgebungsvorrichtung nach Anspruch 1, wobei die Position des Aufklärungsfahrzeugs außerhalb des Fotografierbereichs liegt.

3. Bildgebungsvorrichtung nach Anspruch 1, wobei die Bildgebungsvorrichtung in dem Bildfotografiermodus und in dem Bildübertragungsmodus eine Kommunikation gemäß unterschiedlichen Kommunikationsprotokollen ausführt.

4. Bildgebungsvorrichtung nach Anspruch 1, 2 oder 3, ferner umfassend eine Kommunikationseinheit, die in dem Bildfotografiermodus eine Kommunikation gemäß einem Picture Transfer Protocol (PTP) ausführt und in dem Bildübertragungsmodus eine Kommunikation gemäß einer Massenspeicherklasse (MSC) ausführt.

5. Bildgebungsvorrichtung nach Anspruch 4, wobei die Kommunikationseinheit eine Kommunikationseinheit ist, die mit einer Aufklärungsfahrzeughauptkarosseriesteuervorrichtung kommuniziert.

6. Bildgebungsvorrichtung nach einem der Ansprüche 1 bis 5, wobei die Steuereinheit die Modusumschaltbedingung auf der Basis eines Bildfotografiermusters einstellt und einen Überprüfungsprozess für eine Erfüllung der Modusumschaltbedingung als einen Prozess zum Bestimmen, ob die eingestellte Modusumschaltbedingung erfüllt ist oder nicht, ausführt.

7. Bildgebungsvorrichtung nach einem der Ansprüche 1 bis 6, wobei die Steuereinheit unter Verwendung von Informationen über mindestens eines von einer Bewegungsgeschwindigkeit, einem Bildfotografierintervall und einer Bildfotografierposition der Bildgebungsvorrichtung bestimmt, ob die Modusumschaltbedingung erfüllt ist oder nicht.

8. Bildgebungsvorrichtung nach einem der Ansprüche 1 bis 7, wobei die Steuereinheit einen Prozess zum Erfassen der Informationen über mindestens eines von der Bewegungsgeschwindigkeit, dem Bildfotografierintervall und der Bildfotografierposition der Bildgebungsvorrichtung ausführt und unter Verwendung der erfassten Informationen bestimmt, ob die Modusumschaltbedingung erfüllt ist oder nicht.

9. Bildgebungsvorrichtung nach einem der Ansprüche 1 bis 8, wobei in einem Fall, in dem die Modusumschaltbedingung als erfüllt erkannt wird, die Steuereinheit eine Picture Transfer Protocol-Verbindung (PTP-Verbindung) mit einer über eine Kommunikationseinheit verbundenen Host-Vorrichtung stoppt und als Reaktion auf den Empfang einer Vorrichtungsinformationserfassungsanforderung von der Host-Vorrichtung eine Antwort überträgt, die Vorrichtungsinformationen einschließt, die eine Massenspeicherklassenvorrichtung (MSC-Vorrichtung) angeben.

10. Aufklärungsfahrzeug, das einschließt:
eine Aufklärungsfahrzeughauptkarosseriesteuervorrichtung, die eine Flugsteuerung des Aufklärungsfahrzeugs und eine Fotografiersteuerung einer über eine Kommunikationseinheit verbundenen Bildgebungsvorrichtung durchführt; und
eine Bildgebungsvorrichtung nach einem der Ansprüche 1 bis 9, die eine Bildgebungsvorrichtungssteuereinheit einschließt, die das Bildfotografieren gemäß einem Eingabebefehl von der Aufklärungsfahrzeughauptkarosseriesteuervorrichtung ausführt, wobei die Bildgebungsvorrichtung einen Überprüfungsprozess für eine Erfüllung der Modusumschaltbedingung ausführt, zum Bestimmen, ob eine vorab festgelegte Modusumschaltbedingung erfüllt ist oder nicht, einen Modusumschaltprozess von einem Bildfotografiermodus in einen Bildübertragungsmodus ausführt, in einem Fall, in dem die Modusumschaltbedingung als erfüllt erkannt wird, und zusammen mit dem Modusumschaltprozess einen Prozess zum Umschalten eines Kommunikationsprotokolls mit der Aufklärungsfahrzeughauptkarosseriesteuervorrichtung durchführt.

11. Modussteuerungsverfahren, das in einer Bildgebungsvorrichtung nach einem der Ansprüche 1 bis 9 ausgeführt wird, das einschließt:
Ausführen, durch die Steuereinheit, eines Überprüfungsprozesses für eine Erfüllung der Modusumschaltbedingung oder Bestimmen, ob eine vorab festgelegte Modusumschaltbedingung erfüllt ist oder nicht; und
Ausführen, durch die Steuereinheit, eines Modusumschaltprozesses von dem Bildfotografiermodus in den Bildübertragungsmodus in einem Fall, in dem die Modusumschaltbedingung als erfüllt erkannt wird.

12. Modussteuerungsverfahren, das in einem Aufklärungsfahrzeug nach Anspruch 10 ausgeführt wird, das einschließt:
Ausführen, durch die Bildgebungsvorrichtung, eines Überprüfungsprozesses für eine Erfüllung der Modusumschaltbedingung zum Bestimmen, ob eine vorab festgelegte Modusumschaltbedingung erfüllt ist oder nicht;
Ausführen, durch die Bildgebungsvorrichtung, eines Modusumschaltprozesses von einem Bildfotografiermodus in einen Bildübertragungsmodus, in einem Fall, in dem die Modusumschaltbedingung als erfüllt erkannt ist; und
Durchführen, durch die Bildgebungsvorrichtung, eines Prozesses zum Umschalten eines Kommunikationsprotokolls mit der Aufklärungsfahrzeughauptkarosseriesteuervorrichtung zusammen mit dem Modusumschaltprozess.

13. Programm, das eine Bildgebungsvorrichtung nach einem der Ansprüche 1 bis 9 veranlasst, einen Modussteuerungsprozess auszuführen, wobei die Bildgebungsvorrichtung eine Steuereinheit einschließt, die das Modusumschalten zwischen einem Bildfotografiermodus und einem Bildübertragungsmodus ausführt, wobei das Programm die Steuereinheit veranlasst zum Ausführen von:
einem Überprüfungsprozesses für eine Erfüllung der Modusumschaltbedingung zum Bestimmen, ob eine vorab festgelegte Modusumschaltbedingung erfüllt ist oder nicht; und
einen Modusumschaltprozess von dem Bildfotografiermodus in den Bildübertragungsmodus, in einem Fall, in dem die Modusumschaltbedingung als erfüllt erkannt ist.

## Revendications

1. Dispositif d'imagerie (30) d'un véhicule de reconnaissance (10), le dispositif d'imagerie comprenant :
une unité de capture d'images (32, 33, 34) configurée pour capturer des images photographiques ou vidéo d'une zone photographique lorsqu'elle est activée,
une unité de stockage (35) configurée pour stocker les images photographiques ou vidéo générées par le dispositif d'imagerie, et une unité de commande (31) configurée pour communiquer par l'intermédiaire d'une interface de communications avec un dispositif de commande de corps principal de véhicule de reconnaissance (20) du véhicule de reconnaissance,
dans lequel l'unité de commande est configurée pour fonctionner dans un mode de photographie d'images dans lequel l'unité de commande est configurée pour recevoir des informations de commande en provenance du dispositif de commande de corps principal de véhicule de reconnaissance du véhicule de reconnaissance et dans un mode de transfert d'images dans lequel l'unité de commande est configurée pour transférer les images photographiques ou vidéo de l'unité de stockage au dispositif de commande de corps principal de véhicule de reconnaissance du véhicule de reconnaissance,
dans lequel l'unité de commande est configurée, en réponse à la détection de conditions de commutation de mode, pour commuter, de manière autonome, du mode de photographie d'images au mode de transfert d'images afin de transférer la ou les images photographiques ou vidéo au dispositif de commande de corps principal de véhicule de reconnaissance du véhicule de reconnaissance,
dans lequel les conditions de commutation de mode comprennent un ou plusieurs parmi une position du véhicule de reconnaissance, une vitesse du véhicule de reconnaissance et un intervalle de photographie d'images du dispositif d'imagerie.

2. Dispositif d'imagerie selon la revendication 1, dans lequel la position du véhicule de reconnaissance est en dehors de la zone photographique.

3. Dispositif d'imagerie selon la revendication 1, dans lequel le dispositif d'imagerie exécute une communication conformément à différents protocoles de communication dans le mode de photographie d'images et le mode de transfert d'images.

4. Dispositif d'imagerie selon les revendications 1, 2 ou 3, comprenant en outre une unité de communication qui exécute une communication selon un protocole de transfert d'images (PTP) dans le mode de photographie d'images et exécute une communication selon une classe de stockage de masse (MSC) dans mode de transfert d'images.

5. Dispositif d'imagerie selon la revendication 4, dans lequel l'unité de communication est une unité de communication qui communique avec un dispositif de commande d corps principal de véhicule de reconnaissance.

6. Dispositif d'imagerie selon l'une quelconque des revendications 1 à 5, dans lequel l'unité de commande définit la condition de commutation de mode sur la base d'un modèle de photographie d'images, et exécute un processus de vérification de satisfaction de condition de commutation de mode en tant que processus permettant de déterminer si la condition de commutation de mode définie est satisfaite ou non.

7. Dispositif d'imagerie selon l'une quelconque des revendications 1 à 6, dans lequel l'unité de commande détermine si la condition de commutation de mode est satisfaite ou non à l'aide d'informations relatives au moins l'un parmi une vitesse de déplacement, un intervalle de photographie d'images et une position de photographie d'images du dispositif d'imagerie.

8. Dispositif d'imagerie selon l'une quelconque des revendications 1 à 7, dans lequel l'unité de commande exécute un processus d'acquisition des informations relatives à au moins l'un parmi la vitesse de déplacement, l'intervalle de photographie d'images et la position de photographie d'images du dispositif d'imagerie, et détermine si la condition de commutation de mode est satisfaite ou non à l'aide des informations acquises.

9. Dispositif d'imagerie selon l'une quelconque des revendications 1 à 8, dans lequel, dans le cas où la condition de commutation de mode est détectée comme étant satisfaite, l'unité de commande arrête une connexion de protocole de transfert d'images (PTP) avec un dispositif hôte connecté par l'intermédiaire d'une unité de communication, et transmet une réponse comportant des informations de dispositif indiquant un dispositif de classe de stockage de masse (MSC) en réponse à une réception d'une demande d'acquisition d'informations de dispositif en provenance du dispositif hôte.

10. Véhicule de reconnaissance comportant :
un dispositif de commande de corps principal de véhicule de reconnaissance qui réalise une commande d vol du véhicule de reconnaissance et une commande de photographie d'un dispositif d'imagerie connecté par l'intermédiaire d'une unité de communication ; et
un dispositif d'imagerie selon l'une quelconque des revendications 1 à 9, comportant une unité de commande de dispositif d'imagerie, qui exécute une photographie d'images conformément à une instruction d'entrée provenant du dispositif de commande de corps principal de véhicule de reconnaissance, dans lequel le dispositif d'imagerie exécute un processus de vérification de satisfaction de condition de commutation de mode pour déterminer si une condition de commutation de mode pré-spécifiée est satisfaite ou non, exécute un processus de commutation de mode d'un mode de photographie d'images à un mode de transfert d'images dans le cas où la condition de commutation de mode est détectée comme étant satisfaite, et réalise un processus de commutation d'un protocole de communication avec le dispositif de commande de corps principal de véhicule de reconnaissance en même temps que le processus de commutation de mode.

11. Procédé de commande de mode exécuté dans un dispositif d'imagerie selon l'une quelconque des revendications 1 à 9, comportant :
l'exécution, par l'unité de commande, d'un processus de vérification de satisfaction de condition de commutation de mode ou le fait de déterminer si une condition de commutation de mode pré-spécifiée est satisfaite ou non ; et
l'exécution, par l'unité de commande, d'un processus de commutation de mode du mode de photographie d'images au mode de transfert d'images dans le cas où la condition de commutation de mode est détectée comme étant satisfaite.

12. Procédé de commande de mode exécuté dans un véhicule de reconnaissance selon la revendication 10, comportant :
l'exécution, par le dispositif d'imagerie, d'un processus de vérification de satisfaction de condition de commutation de mode consistant à déterminer si une condition de commutation de mode pré-spécifiée est satisfaite ou non ;
l'exécution, par le dispositif d'imagerie, d'un processus de commutation de mode d'un mode de photographie d'images à un mode de transfert d'images dans le cas où la condition de commutation de mode est détectée comme étant satisfaite ; et
la réalisation, par le dispositif d'imagerie, d'un processus de commutation d'un protocole de communication avec le dispositif de commande de corps principal de véhicule de reconnaissance en même temps que le processus de commutation de mode.

13. Programme amenant un dispositif d'imagerie selon l'une quelconque des revendications 1 à 9 à exécuter un processus de commande de mode, le dispositif d'imagerie comportant une unité de commande qui exécute une commutation de mode entre un mode de photographie d'images et un mode de transfert d'images, le programme amenant l'unité de commande à exécuter :
un processus de vérification de satisfaction de condition de commutation de mode consistant à déterminer si une condition de commutation de mode pré-spécifiée est satisfaite ou non ; et
un processus de commutation de mode du mode de photographie d'images au mode de transfert d'images dans le cas où la condition de commutation de mode est détectée comme étant satisfaite.
